(19) Europäisches Patentamt / European Patent Office / Office européen des brevets

(11) **EP 3 403 339 B1**

(12) **EUROPEAN PATENT SPECIFICATION**

(45) Date of publication and mention
of the grant of the patent:
**04.11.2020 Bulletin 2020/45**

(51) Int Cl.:
**H04B 7/06** *(2006.01)*    **H04B 7/0452** *(2017.01)*

(21) Application number: **17701191.3**

(86) International application number:
**PCT/IB2017/050199**

(22) Date of filing: **13.01.2017**

(87) International publication number:
**WO 2017/122176 (20.07.2017 Gazette 2017/29)**

(54) **PRACTICAL HYBRID PRECODING SCHEME FOR MULTI-USER MASSIVE MIMO SYSTEMS**

PRAKTISCHES HYBRIDES VORCODIERUNGSSCHEMA FÜR MASSIVE
MEHRBENUTZER-MIMO-SYSTEME

SCHÉMA DE PRÉCODAGE HYBRIDE PRATIQUE POUR SYSTÈMES MIMO MULTIUTILISATEUR
MASSIFS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.01.2016  US 201662278128 P**

(43) Date of publication of application:
**21.11.2018  Bulletin 2018/47**

(73) Proprietor: **Telefonaktiebolaget LM Ericsson
(publ)**
**164 83 Stockholm (SE)**

(72) Inventors:
• **SEYEDMEHDI, Seyed Hossein**
  **Kanata, Ontario K2K 0C3 (CA)**
• **BOUDREAU, Gary David**
  **Kanata, Ontario K2K 2K9 (CA)**
• **HANIF, Muhammad**
  **Edmonton, Alberta T6E 2E3 (CA)**
• **YANG, Hong-Chuan**
  **Victoria, British Columbia V8N 6B2 (CA)**
• **SICH, Edward**
  **Kanata, Ontario K0G 1J0 (CA)**

(74) Representative: **Zacco Sweden AB**
**Valhallavägen 117**
**Box 5581**
**114 85 Stockholm (SE)**

(56) References cited:
**US-A1- 2015 365 142**

• LIANG LE ET AL: "Low-Complexity Hybrid
Precoding in Massive Multiuser MIMO Systems",
IEEE WIRELESS COMMUNICATIONS LETTERS,
IEEE, PISCATAWAY, NJ, USA, vol. 3, no. 6, 1
December 2014 (2014-12-01), pages 653-656,
XP011568051, ISSN: 2162-2337, DOI:
10.1109/LWC.2014.2363831 [retrieved on
2014-12-15] cited in the application
• NI WEIHENG ET AL: "Hybrid Block
Diagonalization for Massive Multiuser MIMO
Systems", IEEE TRANSACTIONS ON
COMMUNICATIONS, IEEE SERVICE CENTER,
PISCATAWAY, NJ. USA, vol. 64, no. 1, 1 January
2016 (2016-01-01), pages 201-211, XP011593788,
ISSN: 0090-6778, DOI:
10.1109/TCOMM.2015.2502954 [retrieved on
2016-01-14]
• HANIF MUHAMMAD ET AL: "Practical hybrid
precoding for multi-user massive MIMO
systems", 2016 IEEE CANADIAN CONFERENCE
ON ELECTRICAL AND COMPUTER
ENGINEERING (CCECE), IEEE, 15 May 2016
(2016-05-15), pages 1-4, XP032988944, DOI:
10.1109/CCECE.2016.7726751 [retrieved on
2016-10-31]

EP 3 403 339 B1

**Description**

Technical Field

The present disclosure relates to Massive Multiple Input Multiple Output (M-MIMO), antenna selection schemes, and low complexity.

Background

With the increasing demands for higher throughput and better spectral efficiency, Massive Multiple Input Multiple Output (M-MIMO) systems have become increasingly popular (see, for example, F. Rusek et al., "Scaling up MIMO: Opportunities and Challenges with Very Large Arrays," IEEE Signal Process. Mag., Vol. 30, No. 1, pages 40-60, January 2013 (hereinafter "R1") and E. Larsson et al., "Massive MIMO for Next Generation Wireless Systems," IEEE Commun. Mag., Vol. 54, No. 2, pages 186-195, February 2014 (hereinafter "R2"). In M-MIMO systems, the Base Station (BS) of a cell, equipped with a large number of antennas, serves a relatively small number of users. Although these systems bring significant improvements in the system spectral efficiency, they require overcoming some challenges associated with them. Amongst those challenges are the increased hardware cost and power consumption of a large number of Radio Frequency (RF) chains and a high computational complexity of the digital signal processing at the BS (see E. Bjornson et al., Optimal Design of Energy-Efficient Multi-User MIMO Systems: Is Massive MIMO the Answer?," IEEE Trans. Wireless Commun., Vol. 14, No. 6, pages 3059-3075, June 2015 (hereinafter "R3")). These problems can effectively be solved by reducing the number of RF chains and performing either antenna subset selection (see B.M. Lee et al., "An Energy Efficient Antenna Selection for Large Scale Green MIMO Systems," 2013 IEEE Int. Symp. Circuits and Systems (ISCAS), pages 950-953, May 2013 (hereinafter "R4") and X. Gao et al., "Antenna Selection in Measured Massive MIMO Channels Using Convex Optimization," IEEE Globecom Workshops, pages 129-134, December 2013 (hereinafter "R5")) or hybrid precoding at the BS (see X. Zhang et al., "Variable-Phase-Shift-Based RF Baseband Codesign for MIMO Antenna Selection," IEEE Trans. Signal Process, Vol. 53, No. 11, pages 4091-4103, November 2005 (hereinafter "R6"); S. Han et al., "Large-Scale Antenna Systems with Hybrid Analog and Digital Beamforming for Millimeter Wave 5G," IEEE Commun. Mag., Vol. 53, No. 1, pages 186-194, January 2015 (hereinafter "R7"); O. El Ayach et al., "Spatially Sparse Precoding in Millimeter Wave MIMO Systems," IEEE Trans. Wireless Commun., Vol. 13, No. 3, pages 1499-1513, March 2014 (hereinafter "R8"); A. Alkhateeb et al., "Limited Feedback Hybrid Precoding for Multi-User Millimeter Wave Systems," IEEE Trans. Wireless Commun., Vol. 14, No. 11, pages 6481-6494, November 2015 (hereinafter "R9"); L. Liang et al., "Low-Complexity Hybrid Precoding in Massive Multiuser MIMO Systems," IEEE Wireless Commun. Lett., Vol. 3, No. 6, pages 653-656, December 2014 (hereinafter "R10"); and X. Gao et al., "Energy-Efficient Hybrid Analog and Digital Precoding for mmWave MIMO Systems with Large Antenna Arrays," CoRR, Vol. abs/1507.04592, 2015 (hereinafter "R11")).

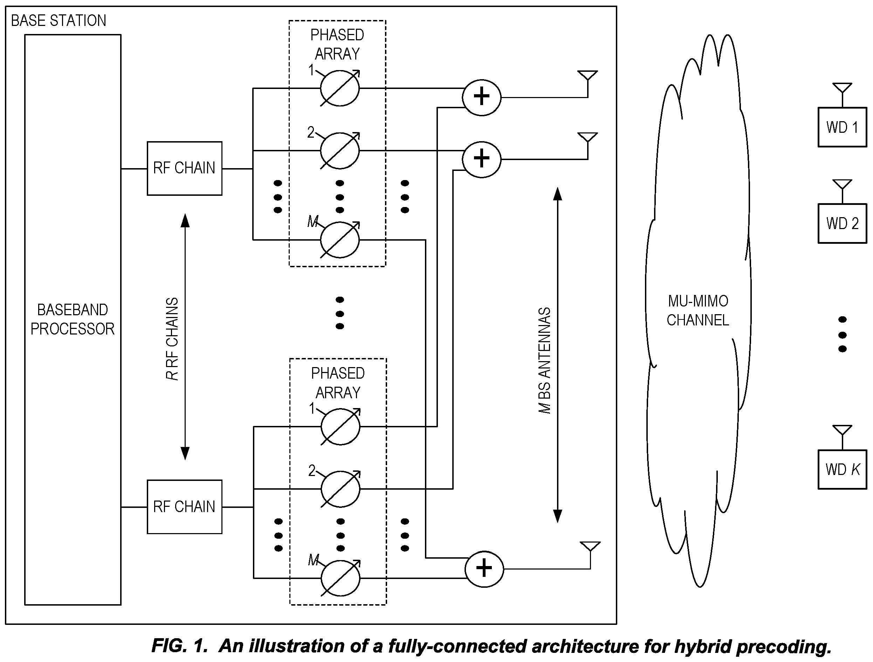

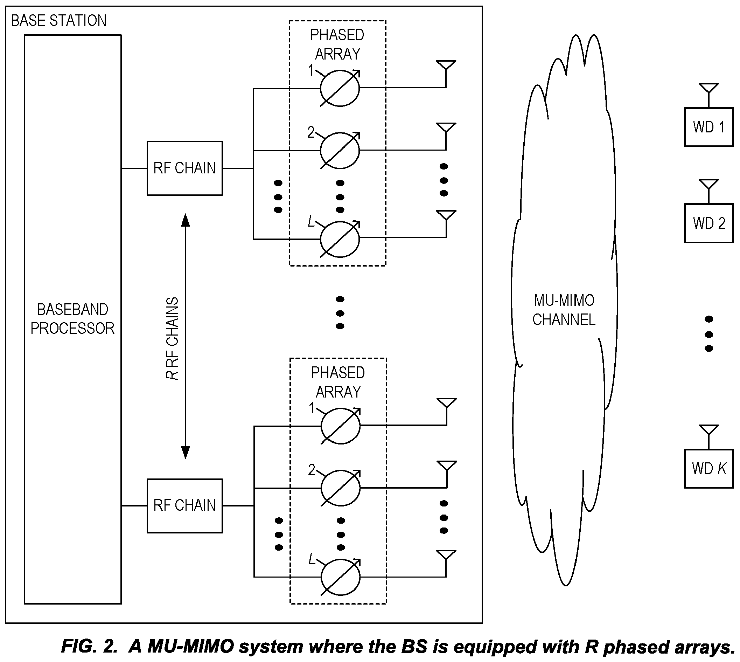

In hybrid precoding, the BS is equipped with a limited number of RF chains, and each RF chain feeds its data to a phased array comprising phase shifters. The BS performs digital precoding at the baseband and adjusts the phase of the phase shifters to serve the scheduled users. The initial work related to hybrid precoding considered a fully-connected architecture (see R6-R11). Figure 1 shows a fully-connected architecture where each RF chain is connected to all the antennas via phase shifters and RF adders. For an M-MIMO setting, a fully connected architecture has some limitations. Specifically, this architecture requires a large number of phase shifters and RF adders resulting in high hardware cost and power consumption. Secondly, each RF chain feeds all the antennas which makes the hardware highly energy-intensive (see R11). As such, a sub-connected architecture is considered where each RF chain feeds only a subset of antennas as shown in Figure 2. Note that the sub-connected architecture not only requires less phase shifters but also does not require any RF adder.

Most of the work related to hybrid precoding is for the fully connected architecture (see R6-R11). For example, R8 proposes a hybrid precoder based on orthogonal match pursuit to serve a single user. The authors in R9 and R10 both present Zero-Forcing (ZF) based hybrid precoding algorithms for a fully connected architecture in a Multi-User Multiple Input Multiple Output (MU-MIMO) setting. For a sub-connected architecture, however, there are only limited results available. In particular, R11 proposes an algorithm based on the principle of successive interference cancellation for a sub-connected transmitter serving a single user.

What is needed, however, is a practical hybrid precoding scheme for multi-user M-MIMO systems.

Document US 2015/365142 A1 may be construed to disclose methods and systems for beam forming include measuring channel state information for a set of different codebook entries. An angle of arrival (AoA) distribution is determined with a processor using compressive testing based on the measured channel state information. A set of phase shift values is determined based on the determined AoA to perform phased array beamforming.

Document "Low-Complexity Hybrid Precoding in Massive Multiuser MIMO Systems", Le Liang et.al., IEEE Wireless Communications Letters, vol. 3, no. 6, October 2014 may be construed to disclose a low-complexity hybrid precoding scheme to approach the performance of the traditional baseband zero-forcing (ZF) precoding (referred to as full-complexity ZF), which is considered a virtually optimal linear precoding scheme in massive MIMO systems. The proposed hybrid precoding scheme, named phased-ZF (PZF), essentially applies phase-only control at the RF domain and then performs a low-dimensional baseband ZF precoding based on the effective channel seen from baseband. Heavily quantized RF phase control up to 2 bits of precision is also considered and shown to incur very limited degradation.

Document "Hybrid Block Diagonalization for Massive Multiuser MIMO Systems", Weiheng Ni et.al., IEEE Transactions on Communications, vol. 64, no. 1, April 2015 may be construed to disclose a technique pertaining to the downlink communication of a massive multiuser MIMO (MU-MIMO) system, and a low-complexity hybrid block diagonalization (Hy-BD) scheme is proposed to approach the capacity performance of the traditional BD processing method. It is aimed to harvest the large array gain through the phase-only RF precoding and combining and then digital BD processing is performed on the equivalent baseband channel.

Summary

The invention is defined by a network node, a method, and a computer program according to the independent claims. Developments are set forth in the dependent claims.

In some embodiments, the baseband processor is configured to perform the ZF beamforming by precoding data symbols intended for transmission to the scheduled wireless devices in accordance with a ZF precoding matrix **B** defined as:

$$\mathbf{B} = \sqrt{\frac{P_{tot}}{Tr(HWW^H H^H)^{-1}}} W^H H^H (HWW^H H^H)^{-1}$$

where $P_{tot}$ is a transmit power available for transmission, Tr is a trace function, **H** is a matrix of channel gains between the antennas and the scheduled wireless devices, and **W** is

$$\begin{bmatrix} \mathbf{w_1} & 0 & \cdots & 0 \\ 0 & \mathbf{w_2} & \cdots & 0 \\ \vdots & \vdots & \ddots & \vdots \\ 0 & 0 & \cdots & \mathbf{w_R} \end{bmatrix}$$

where $\mathbf{w_r}$ is a unity norm vector of the phase-shifts applied by the r-th phased array.

In some embodiments, for a r-th phased array for all values of j from 1 to L, the baseband processor is further configured to adjust the phase-shift applied by the j-th phase shifter of the r-th phased array such that the phase shift value applied by the j-th phase shifter of the r-th phased array is equal to $-\phi_j$, where $\phi_j$ is a phase angle of the channel gain between the antenna connected to the output of the j-th phase shifter and a corresponding scheduled wireless device assigned to the r-th phased array.

In some embodiments, in order to adjust the phase-shifts applied by the phase shifters of the phased arrays according to the EGT scheme, the baseband processor is further configured to adjust the phase-shifts applied by the phase shifters of a first phased array in an EGT fashion (i.e., according to the EGT scheme) based on channel gains from the respective subset of the antennas to a first scheduled wireless device assigned to the first phased array and adjust the phase-shifts applied by the phase shifters of a second phased array in an EGT fashion based on channel gains from the respective subset of the antennas to a second scheduled wireless device assigned to the second phased array.

Further, in some embodiments, the EGT scheme is a sequential EGT scheme such that the first scheduled wireless device assigned to the first phased array is the first scheduled wireless device in a defined sequence of scheduled wireless devices and the second scheduled wireless device assigned to the second phased array is the second scheduled wireless device in the defined sequence of scheduled wireless devices.

In some other embodiments, the EGT scheme is a best user EGT scheme such that the first scheduled wireless device assigned to the first phased array is one of a number of scheduled wireless devices having a best channel metric from among channel metrics for the channel between the respective subset of the antennas coupled to the first phased array and the scheduled wireless devices and the second scheduled wireless device assigned to the second phased array is one of the remaining, unassigned scheduled wireless devices having a best channel metric from among channel metrics for the channel between the respective subset of the antennas coupled to the second phased array and the remaining, unassigned scheduled wireless devices. Further, in some embodiments, for each scheduled wireless device, the channel metrics for the channel between the respective subset of the antennas coupled to the first phased array and the scheduled wireless devices are $l_1$-norms of the channel gains from the respective subset of the antennas to the scheduled wireless devices.

In some embodiments, the EGT scheme is a sequential EGT scheme, the number (K) of scheduled wireless devices is equal to R, and, in order to adjust the phase-shifts applied by the phase shifters of the phased arrays according to the sequential EGT scheme, the baseband processor is further configured to sequentially assign the phased arrays to the number (K) of scheduled wireless devices and, for each phased array, adjust the phase-shifts applied by the phase shifters of the phased array in an EGT fashion based on channel gains from the respective subset of the antennas to one of the number (K) of scheduled wireless devices to which the phased array is assigned.

In some embodiments, the EGT scheme is a sequential EGT scheme, the number (K) of scheduled wireless devices is less than R, and, in order to adjust the phase-shifts applied by the phase shifters of the phased arrays according to the sequential EGT scheme, the baseband processor is further configured to sequentially assign the phased arrays to the number (K) of scheduled wireless devices in a repetitive fashion until each of the phased arrays is assigned to one of the number (K) of scheduled wireless devices and, for each phased array, adjust the phase-shifts applied by the phase shifters of the phased array in an EGT fashion based on channel gains from the respective subset of the antennas to the one of the number (K) of scheduled wireless devices to which the phased array is assigned.

In some embodiments, the EGT scheme is a best user EGT scheme, the number (K) of scheduled wireless devices is equal to R, and, in order to adjust the phase-shifts applied by the plurality of phase shifters of the plurality of phased arrays according to the best user EGT scheme, the baseband processor is further configured to assign the phased arrays to the number (K) of scheduled wireless devices according to channel metrics for the channels between the phased arrays and the number (K) of scheduled wireless devices and, for each phased array, adjust the phase-shifts applied by the phase shifters of the phased array in an EGT fashion based on channel gains from the respective subset of the antennas to one of the number (K) of scheduled wireless devices to which the phased array is assigned.

In some embodiments, the EGT scheme is a best user EGT scheme, the number (K) of scheduled wireless devices is less than R, and, in order to adjust the phase-shifts applied by the phase shifters of the phased arrays according to the best user EGT scheme, the baseband processor is further configured to assign the phased arrays to the number (K) of scheduled wireless devices according to channel metrics for the channels between the phased arrays and the number (K) of scheduled wireless devices in a repetitive fashion until each of the arrays is assigned to one of the number (K) of scheduled wireless devices and, for each phased array, adjust the phase-shifts applied by the phase shifters of the phased array in an EGT fashion based on channel gains from the respective subset of the antennas to the one of the number (K) of scheduled wireless devices to which the phased array is assigned.

Further, in some embodiments, for each phased array, the channel metrics are $l_1$-norms of the channel gains from the respective subset of the antennas to the scheduled wireless devices.

In some embodiments, the baseband processor is further configured to adaptively vary Signal-to-Noise Ratio (SNR) and/or Signal-to-Interference-plus-Noise Ratio (SINR) of the scheduled wireless devices based on the number of wireless devices being scheduled. Further, in some embodiments, the SNR and/or SINR of the scheduled wireless devices are adaptively varied to maximize possible spectral efficiency.

Those skilled in the art will appreciate the scope of the present disclosure and realize additional aspects thereof after reading the following detailed description of the embodiments in association with the accompanying drawing figures.

Brief Description of the Drawings

The accompanying drawing figures incorporated in and forming a part of this specification illustrate several aspects of the disclosure, and together with the description serve to explain the principles of the disclosure.

Figure 1 illustrates a fully-connected architecture for hybrid precoding;
Figure 2 illustrates a Multi-User Multiple Input Multiple Output (MU-MIMO) system where the base station is equipped with R phased arrays;
Figure 3 illustrates a MU-MIMO system including a base station according to some embodiments of the present disclosure;
Figure 4 is a flow chart that illustrates the operation of the BS of Figure 2 according to some embodiments of the present disclosure;
Figure 5 illustrates assignment of phased arrays for the sequential Equal Gain Transmission (EGT) scheme;
Figure 6 is a flow chart that illustrates one embodiment of the sequential EGT scheme;
Figure 7 illustrates assignment of phased arrays for a best user EGT scheme;
Figure 8 illustrates assignment of phased arrays for the sequential EGT and best user EGT schemes when K = 2 < R = 4;
Figure 9 is a flow chart that illustrates one embodiment of the best user EGT scheme;
Figure 10 illustrates the spectral efficiency of the proposed schemes against the number of scheduled users, K, in an independent and identically distributed (i.i.d) Rayleigh fading environment with different average Signal-to-Noise Ratios (SNRs);

Figure 11 illustrates the optimal number of scheduled users for the proposed schemes against the average SNR;

Figure 12 illustrates one example of a cellular communications network in which embodiments of the present disclosure may be implemented;

Figures 13 and 14 illustrate example embodiments of a base station; and

Figures 15 and 16 illustrate example embodiments of a wireless device.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein.

The present disclosure comprises embodiments which can be implemented in a network node and a Massive Multiple Input Multiple Output (M-MIMO) capable User Equipment device (UE). The network node herein can be the serving network node of the M-MIMO UE or any network node with which the M-MIMO UE can establish or maintain a communication link and/or receive information (e.g., via a broadcast channel).

The embodiments use a generic term "network node" that may be any kind of network node. Examples are an enhanced or evolved Node B (eNB), a Node B, a Base Station (BS), a wireless Access Point (AP), a BS controller, a radio network controller, a relay, a donor node controlling relay, a Base Transceiver Station (BTS), transmission points, transmission nodes, a Remote Radio Unit (RRU), a Remote Radio Head (RRH), nodes in a Distributed Antenna System (DAS), a core network node, a Mobility Management Entity (MME), etc.

The embodiments also use a generic term "M-MIMO UE" or simply "UE." However, an M-MIMO UE can be any type of wireless device which is capable of at least M-MIMO communication through wireless communication. Examples of such M-MIMO UEs are a sensor, a modem, a smart phone, a Machine Type Communication (MTC) device aka a Machine to Machine (M2M) device, a Personal Digital Assistant (PDA), an iPAD™, a tablet, a smart phone, Laptop Embedded Equipment (LEE), Laptop Mounted Equipment (LME), Universal Serial Bus (USB) dongles, etc.

Although terminology from Third Generation Partnership Project (3GPP) Long Term Evolution (LTE) (or Evolved Universal Terrestrial Radio Access Network (E-UTRAN)) has been used in this disclosure to exemplify the present disclosure and describe both the serving and victim network nodes, this should not be seen as limiting the scope of the present disclosure to only the aforementioned system. Other wireless systems, including Wideband Code Division Multiple Access (WCDMA), Universal Terrestrial Radio Access (UTRA) Frequency Division Duplexing (FDD), UTRA Time Division Duplexing (TDD), and Global System for Mobile Communications (GSM) / GSM Enhanced Data Rates for Global Evolution (EDGE) (GERAN) / EDGE, may also benefit from exploiting the ideas covered within this disclosure. Furthermore, the present disclosure can apply to scenarios in which the serving and victim nodes employ differing Radio Access Technologies (RATs).

The embodiments are described when an M-MIMO UE is configured to be served by or operate with single carrier (aka single carrier operation of the UE) for M-MIMO communication or configured to use or operate single carrier in a network node. However the embodiments are applicable for multi-carrier or carrier aggregation based M-MIMO communication.

As discussed above, current hybrid precoding schemes are mainly for a fully-connected architecture (see Figure 1). There are limited hybrid precoding schemes for a sub-connected architecture (see Figure 2). To the best of the knowledge of the inventors, there is no hybrid precoding scheme proposed for a multi-user sub-connected architecture. As such, two hybrid precoding schemes are proposed herein for a Multi-User Multiple Input Multiple Output (MU-MIMO) system based on Zero-Forcing (ZF) beamforming and equal-gain transmission.

Further, one of the distinct disadvantages of using multiple antennas at the base station is increased hardware cost and software complexity at the base station. This problem gets even worse for M-MIMO systems where hundreds of antennas are envisioned to be used at the base stations. Antenna subset selection can be used to reduce both hardware and software complexities at the base station. Judicious antenna subset selection can provide a significant reduction in the hardware cost and power consumption with only a slight performance loss. Unlike antenna subset selection for point-to-point Multiple Input Multiple Output (MIMO) systems, which is extensively studied in the literature, only limited results are reported for a multiuser scenario.

For a multi-user M-MIMO system, the base station comprises "R" Radio Frequency (RF) chains with each RF chain having L phase shifters associated with it. Each phase shifter serves an antenna for a total of $M = RL$ antennas in the system. As discussed below in detail, the processing at the BS is comprised of adjusting the phase-shifts of the phased arrays and performing ZF beamforming on the resultant equivalent channel at baseband. The proposed method adjusts the phase-shifts using Equal Gain Transmission (EGT). Low complexity close to optimal solutions are defined for sequential-EGT and best EGT.

The advantages of the present disclosure are summarized as follows. The proposed M-MIMO antenna selection methods enable an M-MIMO UE to more efficiently achieve a targeted throughput while employing a reduced complexity implementation. The proposed M-MIMO antenna selection methods achieve close to optimal throughput and have superior performance to known reduced complexity antenna selection algorithms, while also having lower computational complexity. The proposed M-MIMO antenna selection methods achieve close to optimal throughput and provide a significant reduction in hardware complexity and cost. The proposed antenna selection algorithms can be implemented practically through use of existing channel feedback signaling in the LTE network. The proposed M-MIMO antenna selection methods enable the Wide Area Network (WAN) to achieve high spectral efficiency in existing networks.

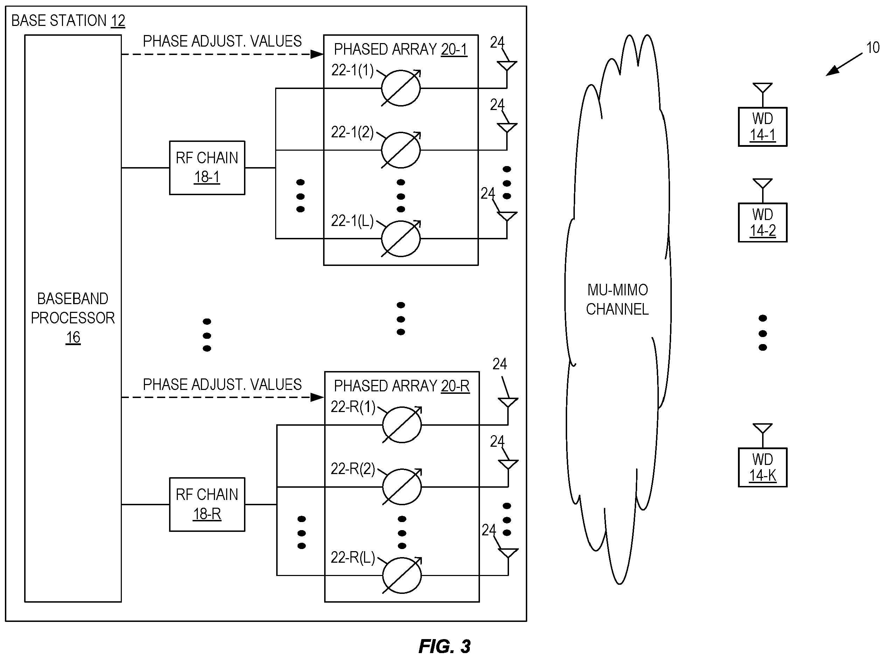

Figure 3 illustrates a MU-MIMO system 10 according to some embodiments of the present disclosure. As illustrated, the MU-MIMO system 10 includes a base station 12 of a cell, where the base station 12 simultaneously serves K scheduled users. The K scheduled users correspond to K wireless devices 14-1 through 14-K (e.g., K UEs), which are generally referred to herein as wireless devices 14 or UEs. The base station 12 is equipped with a baseband processor 16 and R RF chains 18-1 through 18-R, which are generally referred to herein as RF chains 18. The RF chains 18 feed the respective information signals to respective phased arrays 20-1 through 20-R, which are generally referred to herein as phased arrays 20. Each phased array 20 comprises L phase shifters 22. As illustrated, the phase shifters 22 of the phased array 20-1 are referenced as phase shifters 22-1(1) through 22-1(L), and the phase shifters 22 of the phased array 20-R are referenced as phase shifters 22-R(1) through 22-R(L). Furthermore, each phase shifter 22 drives a respective antenna 24 resulting in a total of M = RL antennas 24 at the base station 12.

Let $h_{ij}$ denote the complex channel gain between the ith base station antenna 24-i and the jth scheduled user (i.e., the j-th scheduled wireless device 14), where i = 1, 2, ... M and j = 1, 2, ..., K. The composite received signal vector at the receiver side, denoted by y, can be written as

$$\mathbf{y} = \mathbf{Hx} + \mathbf{n} \tag{1}$$

where x is the vector of transmitted symbols, n is the noise vector, and H = [$h_{ij}$] is the matrix of channel gains between the base station antennas 24 and the users. The base station 12, and specifically the baseband processor 16, precodes the data intended for the scheduled users using ZF beamforming and by adjusting the phase of an individual phase shifter in each phased array 20. Mathematically,

$$\mathbf{x} = \begin{bmatrix} \mathbf{w_1} & 0 & \cdots & 0 \\ 0 & \mathbf{w_2} & \cdots & 0 \\ \vdots & \vdots & \ddots & \vdots \\ 0 & 0 & \cdots & \mathbf{w_R} \end{bmatrix} \mathbf{Bs} = \mathbf{WBs} \tag{2}$$

where $\mathbf{w_r}$ is a unity norm vector of the complex phase shifts caused by the $r^{th}$ phased array 20-r, **B** is the normalized ZF precoding matrix, and **s** is the vector of unity power data symbols intended for the scheduled users. Note that **H** is referred to herein as the channel or channel matrix between the antennas 24 and the wireless devices 14, and **HW** is referred to herein as a resultant equivalent channel that takes into account the complex phase shifts applied by the phased arrays 20. The ZF precoding matrix **B** can be computed as

$$\mathbf{B} = \sqrt{\frac{P_{tot}}{Tr(HWW^H H^H)^{-1}}} W^H H^H (HWW^H H^H)^{-1} \tag{3}$$

where $P_{tot}$ is the transmit power available at the base station 12, Tr is the trace function, and the scaling factor (i.e., the term with the square root) is determined from the total power constraint at the base station 12. Assuming perfect channel state information, the resulting hybrid beamforming will result in zero inter-user interference, and the composite received vector **y** simplifies to

$$\mathbf{y} = \sqrt{\frac{P_{tot}}{Tr(HWW^H H^H)^{-1}}} \mathbf{s} + \mathbf{n} \tag{4}$$

The spectral efficiency of the system, $\eta$, can thus be written as

$$\eta = K log_2 \left( 1 + \frac{P_{tot}}{\sigma^2 Tr(\mathbf{HWW}^H\mathbf{H}^H)^{-1}} \right) \qquad (5)$$

where $\sigma^2$ is the noise variance at each receiver. The spectral efficiency of the system can be maximized by properly designing the analog beamforming vectors, $\mathbf{w_r}$ (where r = 1, ..., R). In the following, two beamforming schemes are presented based on equal gain transmission and their performance is simulated in an independent and identically distributed (i.i.d) Rayleigh fading environment.

Consider a case where only one user is served by the base station 12. The system spectral efficiency in that case simplifies to

$$\eta = log_2 \left( 1 + \frac{P_{tot} \sum_{r=1}^{R} |\mathbf{h_{1r}w_r}|^2}{\sigma^2} \right) \qquad (6)$$

where $\mathbf{h_{1r}}$ is the (row) vector of the channel gains from the $r^{th}$ phased array 20-r to the scheduled user (i.e., to the scheduled wireless device 14). Using the triangle inequality, $\eta$ can be bounded as

$$\eta \le log_2 \left( 1 + \frac{P_{tot} \sum_{r=1}^{R} \|\mathbf{h_{1r}}\|_1^2}{L\sigma^2} \right) \qquad (7)$$

where $\|v\|_1$ denotes the $l_1$-norm of a vector v. The system's spectral efficiency can be maximized by setting the $j^{th}$ entry (where here j represents the j-th phase shifter 22 in the r-th phased array 20-r) of $\mathbf{w_r}$ to $e^{-j\phi_j}/\sqrt{L}$, where $\phi_j$ is the phase angle of the j-th entry of $\mathbf{h_{1r}}$. In other words, the system's spectral efficiency can be maximized by, for each value of j = {1, ..., L}, setting the j-th entry of $\mathbf{w_r}$ to $e^{-j\phi_j}/\sqrt{L}$. In implementation, this is achieved by setting the phase adjustment value for the j-th phase shifter 22-r(j) of the r-th phased array 20-r for j = {1, ..., L} to a value of $-\phi_j$. Also, in order to preserve the output power of the r-th phased array 20-r, an attenuation factor of $1/\sqrt{L}$ is applied in each of the phase-shifters 22-r(j). Thus, EGT based phase adjustments can achieve the maximum spectral efficiency of the system. Notably, EGT sets the phase of the transmission at each antenna 24 to offset the channel induced phase shift. This ensures that, at the receiver of the wireless device 14, the received transmission from each antenna 24 has "equal gain." Mathematically, in the present context, EGT can be described as, for each value of j = {1, ..., L}, setting the j-th entry of $\mathbf{w_r}$ to $e^{-j\phi_j}/\sqrt{L}$.

Now consider a general scenario where the base station 12 serves more than one user simultaneously. Since EGT-based phase adjustments results in the optimal performance for the single user case, we propose to also adjust the phase values of the phase shifters 22 in an EGT fashion (i.e., according to an EGT scheme) for multiple users. For the sake of simplicity, the term assignment is used to refer to the process of adjusting the phase values of the phase shifters 22 in an EGT fashion. For example, for the single-user scenario, all the phased arrays 20 are assigned to the scheduled user (i.e., to the scheduled wireless device 14). For multiple users, different assignment strategies will result in different performance. The best performance is achieved when the phased arrays 20 are assigned to the users (i.e., to the wireless devices 14) by performing an exhaustive search. This process, however, is too computationally intensive and time-consuming to be implemented. As such, two assignment strategies are proposed as described below.

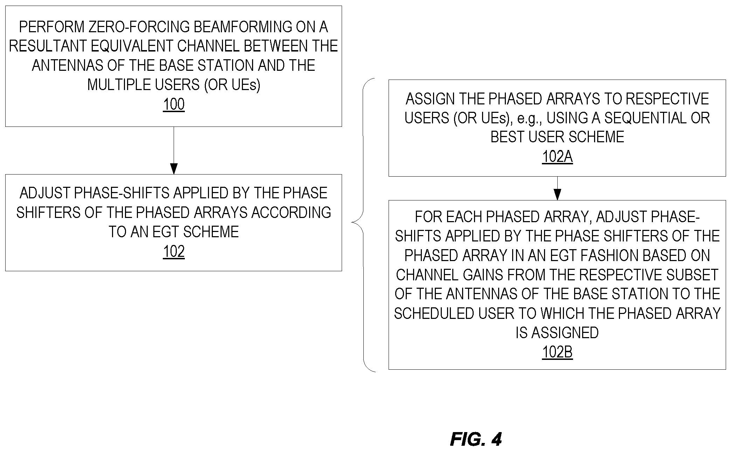

Figure 4 illustrates the operation of the base station 12 of Figure 3 according to some embodiments of the present disclosure. As illustrated, the base station 12 performs ZF beamforming on a resultant equivalent channel between the antennas 24 of the base station 12 and the multiple users (i.e., the multiple wireless devices 14) (step 100). In other words, the base station 12, and in particular the baseband processor 16, performs precoding of transmitted symbols **s** according to the ZF beamforming matrix **B** as mathematically described above in Equation (2). Note that, as described above in Equation (3), the ZF beamforming matrix **B** is a function of **W**, where the elements $\mathbf{w_r}$ of **W** are a function of complex phase shifts caused by the $r^{th}$ phased array 20-r. Thus, when computing the ZF beamforming matrix **B**, at least in some embodiments, the channel matrix **H** is first determined such that the complex phase shifts to be applied by the phased arrays 20 (i.e., $\mathbf{w_r}$) can be computed as described above. Then, using the computed complex phase shifts, **W** is known and, from **W**, the ZF beamforming matrix **B** can be computed. Thus, it can be said that the ZF beamforming matrix **B** is dependent on the complex phase shifts applied by the phase shifters 22 of the phased arrays 20.

The base station 12, and specifically the baseband processor 16, adjusts phase-shifts applied by the phase shifters 22 of the phased arrays 20 according to an EGT scheme (step 102). More specifically, the base station 12, and specifically the baseband processor 16, assigns the phased arrays 20 to respective users (i.e., to respective wireless devices 14) (step 102A). For each phased array 20, the base station 12, and specifically the baseband processor 16, adjusts the phase-shifts applied by the phase shifters 22 of the phased array 20 in an EGT fashion based on channel gains from the respective subset of the antennas 24 of the base station 12 to the scheduled user to which the phased array 20 is assigned (step 102B). More specifically, in some embodiments, the baseband processor 16 adjusts the phase-shifts applied by the phase shifters 22 of the phased array 20 assigned to a particular user (i.e., to a particular wireless device 14) such that, for each phase shifter 22-j, the phase shift applied by the phase shifter 22-j is equal to -$\phi_j$. As discussed below in detail, in some embodiments, the assignment of the phased arrays 20 to the users is done using a sequential scheme. In other embodiments, the assignment of the phased arrays 20 to the users is one using a best user scheme.

In the sequential EGT scheme, the phase-shift values of the first phased array 20-1 are assigned in the EGT fashion based on the channel gains from the phased array 20-1 to the first scheduled user. As discussed above, assigning the phase-shift values of the first phased array 20-1 in the EGT fashion is, at least in some embodiments, implemented by assigning, to each phase shifter 22-1(j) for j = {1, ..., L} in the first phased array 20-1, a phase shift equal to -$\phi_j$. Similarly, the phase-shift values of the second phased array 20-2 are assigned in the EGT fashion based on the channel gains from the second phased array 20-2 to the second scheduled user, and so on.

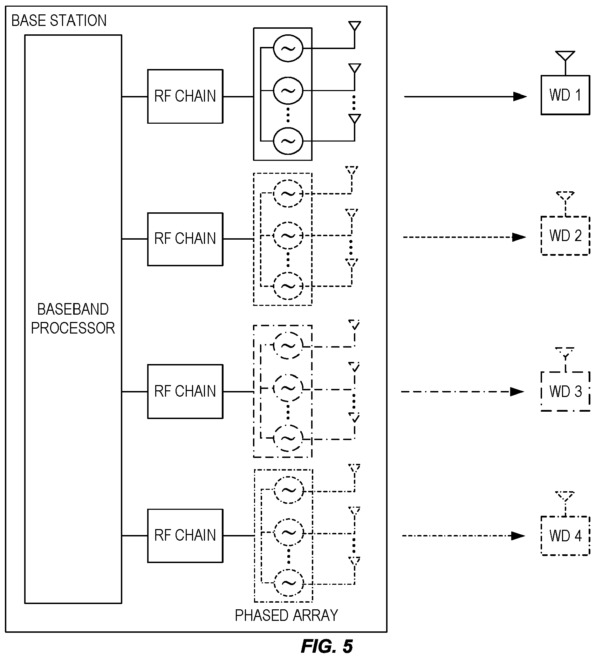

In the sequential EGT method, the first phased array 20-1 is assigned to the first user, the second phased array 20-1 is assigned to the second user, and so on. If there are more phased arrays 20 than scheduled users, then this assignment procedure is repeated until all the phased arrays 20 are assigned to a unique user. Figure 5 shows an illustration of the assignment procedure for the sequential EGT scheme when R = K = 4. Note that the different hashing types used in Figure 5 are to illustrate which phased arrays 20 are assigned to which wireless devices 14.

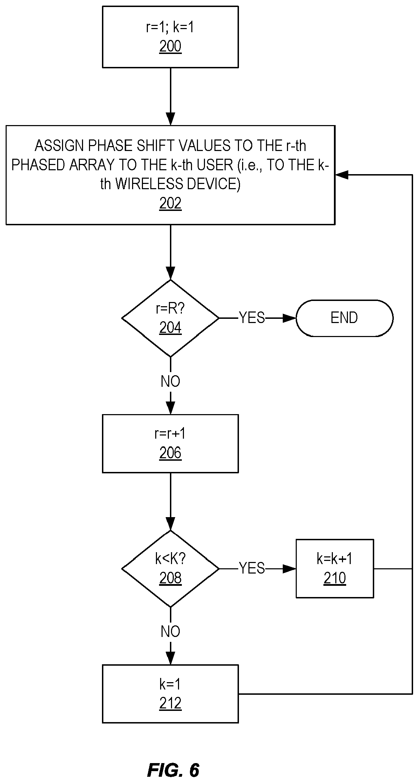

Figure 6 illustrates the operation of the base station 12, and in particular the baseband processor 16, to apply the sequential EGT scheme as described above. As illustrated, a phased array index r is initialized to 1, and a user index k is initialized to 1 (step 200). The base station 12 assigns phase-shift values to the r-th phased array 20-r to the k-th user (i.e., to the k-th wireless device 14) (step 202). If the number of users is less than the number of phased arrays 20 (i.e., if K < R), then the index k will reach the value of K before phase-shift values are assigned to all R of the phased arrays 20. As such, in the process of Figure 6, after assigning phase-shift values to the r-th phased array 20-r, the base station 12 checks to see if r = R (step 204) which means that phase shift values have been assigned to all R of the phased arrays 20 and the process therefore ends. If not, the base station 12 increments r (step 206) and checks to see if k < K (step 208). If so, the index k is incremented (step 210) and the process returns to step 202. However, if the index k is not less than K (i.e., if the index k is equal to K), then the index k is reset to 1 (step 212), and the process returns to step 202.

Thus, if the number of scheduled users is equal to the number of phased arrays (i.e., if K = R), the base station 12, and in particular the baseband processor 16, sequentially assigns the phased arrays 20 to the scheduled users in accordance with some defined sequence order of the scheduled users. Then, for each phased array 20, the baseband processor 16 adjusts the phase-shifts applied by the phase shifters 22 of that phased array 20 in an EGT fashion based on channel gains from the respective subset of the antennas 24 to the particular scheduled users to which the phased array 20 is assigned, as discussed above.

Conversely, if the number of scheduled users is less than the number of phased arrays (i.e., if K < R), the base station 12, and in particular the baseband processor 16, sequentially assigns the phased arrays 20 to the scheduled users in a repetitive fashion until each of the phased arrays 20 is assigned to one of the scheduled users in accordance with some defined sequence order of the scheduled users. Then, for each phased array 20, the baseband processor 16 adjusts the phase-shifts applied by the phase shifters 22 of that phased array 20 in an EGT fashion based on channel gains from the respective subset of the antennas 24 to the particular scheduled users to which the phased array 20 is assigned, as discussed above.

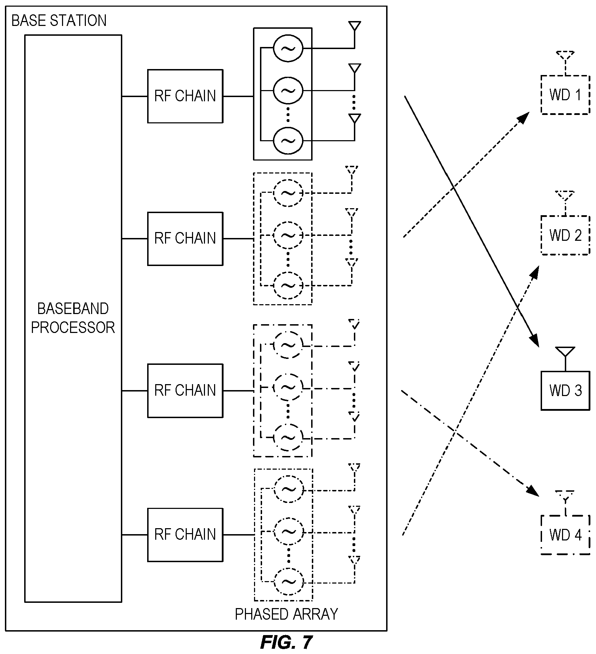

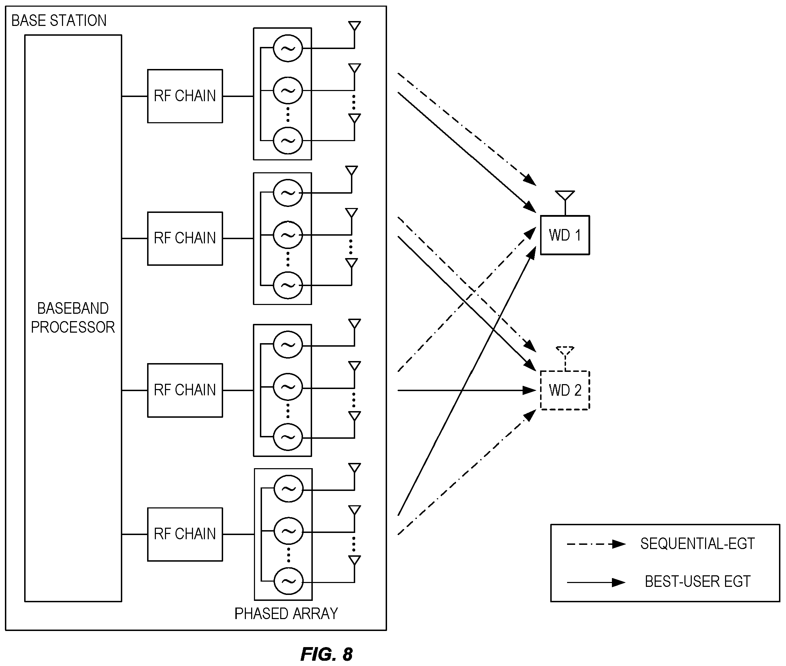

In the best user EGT scheme, instead of assigning the first phased array 20-1 to the first user, the $l_1$-norms of the channel gains from the antennas 24 connected to the phased array 20-1 to all the scheduled users are computed at first based on feedback from channel measurements such as, Channel State Information Reference Signal (CSI-RS), Reference Signal Received Power (RSRP), Reference Signal Received Quality (RSRQ), Signal-to-Interference-plus-Noise Ratio (SINR) RSRP in LTE, for example. Then, the phased array 20-1 is assigned to the user with the highest corresponding channel vector norm. In order to reap the benefits of spatial multiplexing, the user assigned to the first phased array 20-1 is not assigned to other arrays until all the users are assigned to a phased array 20. The second phased array 20-2 is then assigned to the user that has the next highest $l_1$-norm of the corresponding channel vector. Similar assignment is carried out for the remaining phased arrays 20 until all the users are assigned to the phased arrays 20. The assignment procedure is repeated if the number of phased arrays 20 is greater than the number of users. Figure 7 shows an example assignment for a case where R = K = 4. Note that the different hashing types used in Figure 7 are to illustrate which phased arrays 20 are assigned to which wireless devices 14. Figure 8 shows a case where the number of scheduled users is less than the number of RF chains 18 available at the base station 12. Since R > K, the user assignment process is repeated to set the phase values of all the phased arrays 20.

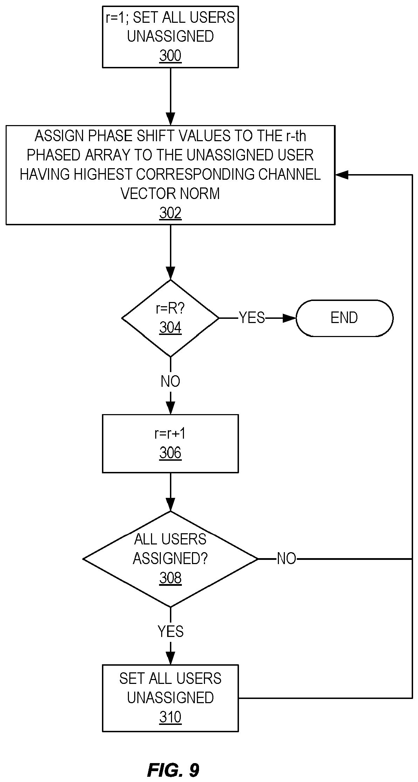

Figure 9 illustrates the operation of the base station 12, and in particular the baseband processor 16, to apply the best user EGT scheme as described above. As illustrated, a phased array index r is initialized to 1, and all users are initialized to "unassigned" (step 300). The base station 12 assigns phase-shift values to the r-th phased array 20-r to the unassigned user (i.e., to the wireless device 14 corresponding to the unassigned user) that has a highest corresponding channel vector norm (step 302). If the number of users is less than the number of phased arrays 20 (i.e., if K < R), then all of the users will be assigned before phase-shift values are assigned to all R of the phased arrays 20. As such, in the process of Figure 9, after assigning phase-shift values to the r-th phased array 20-r, the base station 12 checks to see if r = R (step 304), which means that phase shift values have been assigned to all R of the phased arrays 20 and the process therefore ends. If not, the base station 12 increments r (step 306) and checks to see if all users have been assigned (step 308). If not, the process returns to step 302. If so, the base station 12 sets all users to "unassigned" (step 310) and the process then returns to step 302.

Thus, if the number of scheduled users is equal to the number of phased arrays (i.e., if K = R), the base station 12, and in particular the baseband processor 16, assigns the phased arrays 20 to the scheduled users according to channel metrics of the channels between the phased arrays 20 and the scheduled users (e.g., $l_1$-norms of the channel gains from the respective subsets of the plurality of antennas 24 coupled to the phased arrays 20 to the scheduled users). Then, for each phased array 20, the baseband processor 16 adjusts the phase-shifts applied by the phase shifters 22 of that phased array 20 in an EGT fashion based on channel gains from the respective subset of the antennas 24 to the particular scheduled users to which the phased array 20 is assigned, as discussed above.

Conversely, if the number of scheduled users is less than the number of phased arrays (i.e., if K < R), the base station 12, and in particular the baseband processor 16, assigns the phased arrays 20 to the scheduled users according to channel metrics of the channels between the phased arrays 20 and the scheduled users (e.g., $l_1$-norms of the channel gains from the respective subsets of the plurality of antennas 24 coupled to the phased arrays 20 to the scheduled users) in a repetitive fashion until each of the phased arrays 20 is assigned to one of the scheduled users. Then, for each phased array 20, the baseband processor 16 adjusts the phase-shifts applied by the phase shifters 22 of that phased array 20 in an EGT fashion based on channel gains from the respective subset of the antennas 24 to the particular scheduled users to which the phased array 20 is assigned, as discussed above.

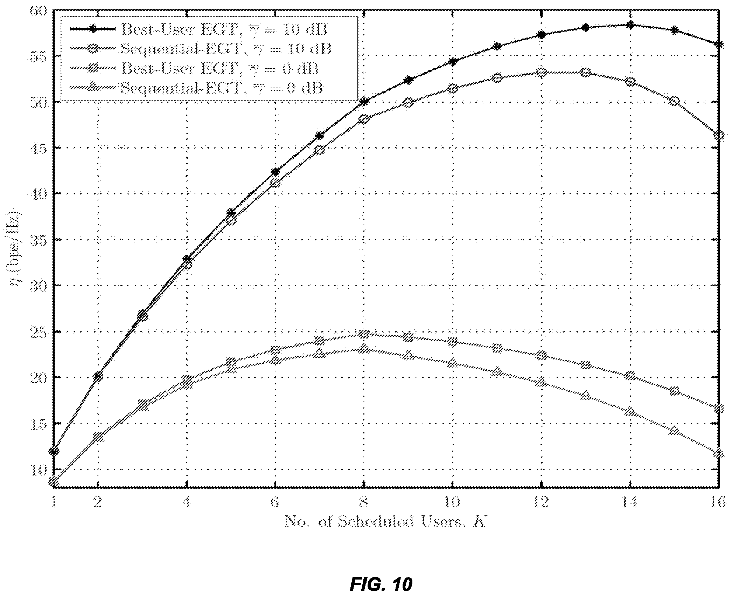

Figure 10 shows the spectral efficiency of both schemes against the number of scheduled users (K) in an i.i.d Raleigh fading environment with different average Signal-to-Noise Ratios (SNRs). In this example, the number of phased arrays 20 is R = 16, and each phased array 20 has L = 32 phase shifters 22. The efficiencies for both the schemes show a peak, and the optimal number of users, K*, that maximizes the spectral efficiency varies by changing the individual link SNR. Specifically, K* increases by increasing $\bar{\gamma}$ for both the schemes, where $\bar{\gamma}$ is the individual link average SNR defined as:

$$\bar{\gamma} = \frac{P_{tot} E \left( \left| h_{ij} \right|^2 \right)}{\sigma^2}$$

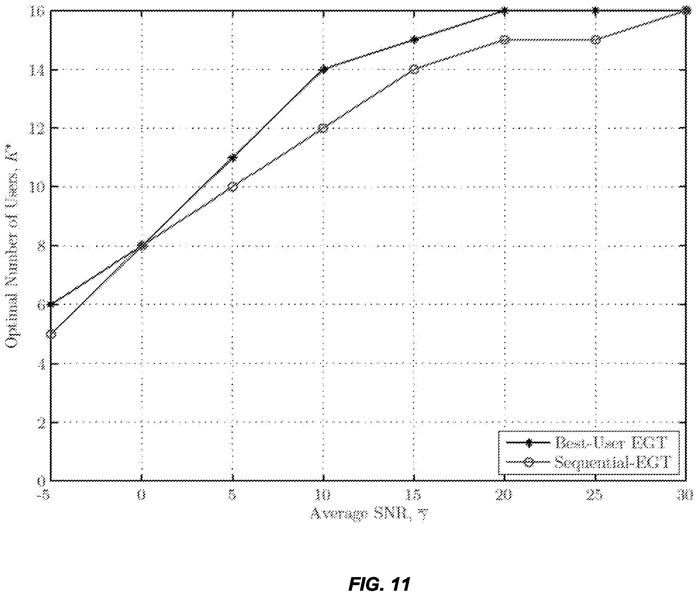

in an i.i.d Rayleigh fading environment. Figure 11, which displays K* against $\bar{\gamma}$, also confirms this observation. Furthermore, the optimal number of users for the best user EGT turns out to always be greater than or equal to that for the sequential EGT scheme.

In some embodiments, a desired users trace based antenna selection scheme is used. In these embodiments, the SNR and/or SINR of the scheduled users is adaptively varied based on the number of users or wireless devices 14 being scheduled by the base station 12 or eNB to achieve the maximum possible spectral efficiency. The optimal SINR for a given number of users K can be computed in real time based on the number of active users being served by the base station 12, or precomputed in a lookup table. The SINR for each user being scheduled can be adapted using well known link adaptation methods to select the transmit power, modulation, and coding to achieve the target SINR.

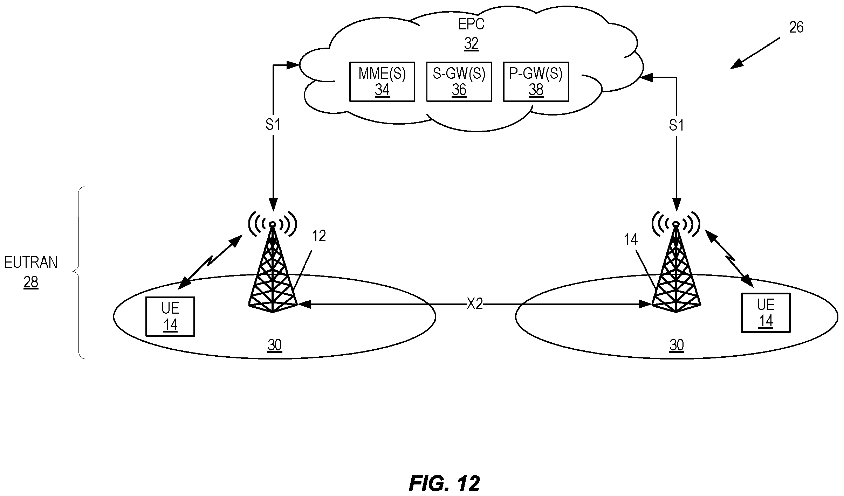

As discussed above, embodiments of the present disclosure are implemented in a base station 12 or other network node (or more specifically radio access node) in a cellular communications network. One example of a cellular communications network 26 is illustrated in Figure 12. In this example, the cellular communications network 26 is a 3GPP LTE network; however, the present disclosure is not limited thereto. As illustrated, the cellular communications network 26 includes a Radio Access Network (RAN) 28, which for LTE is the E-UTRAN. The RAN 28 includes a number of base stations 12, which in LTE are referred to as eNBs, serving corresponding cells 30. The base stations 12 provide radio access to wireless devices 14, which in LTE are referred to as UEs. Note that, as used herein, the term "base station" is not limited to any particular type of base station or any particular type of eNB (e.g., a macro eNB or low-power eNB (e.g., a home eNB, a pico eNB, or the like)). Likewise, a wireless device 14 or UE is not limited to any particular type of wireless device 14 or UE and may be any type of device capable of receiving (and potentially transmitting) wireless signals from the base stations 12. It should also be noted that the terms "user" and "wireless device" or "UE" are used synonymously herein. The cellular communications network 28 also includes a core network 32, which in LTE is the Evolved Packet Core (EPC). The core network 32 may include various core network nodes such as, for example, MMEs 34, Serving Gateways (S-GWs) 36, and Packet Data Network Gateways (P-GWs) 38.

The embodiments of the present disclosure described herein may be implemented in the base stations 12.

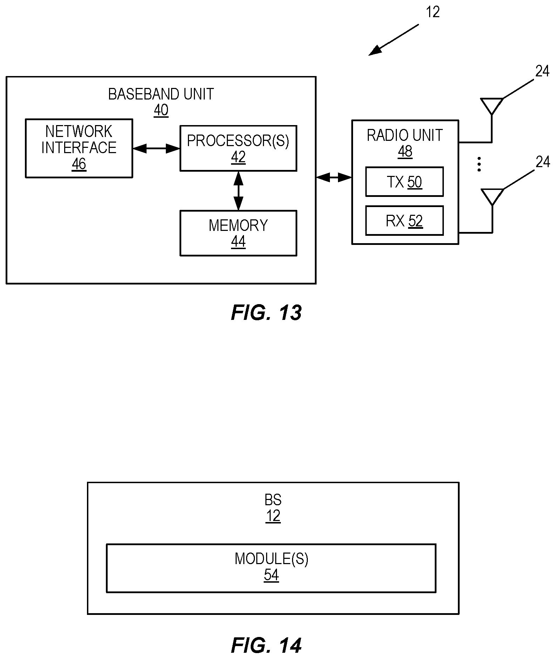

Figure 13 is a schematic block diagram of the base station 12 according to some embodiments of the present disclosure. As illustrated, the base station 12 includes a baseband unit 40 that includes one or more processors 42 (e.g., Central Processing Units (CPUs), Application Specific Integrated Circuits (ASICs), Field Programmable Gate Arrays (FPGAs), and/or the like), memory 44, and a network interface 46 as well as a radio unit 48 that includes a transmitter 50 and a receiver 52 coupled to multiple antennas 24. As discussed above, the radio unit 48 includes multiple (R) RF chains 18, and multiple (R) phased arrays 20 each including a number (L) of phase shifters 22 arranged in the sub-connected architecture. As described above, the phased arrays 20 are coupled to respective (disjoint) subsets of the antennas 24. Within each phased array 20, each phase shifter 22 in the phased array 20 is coupled to a different antenna 24 in the respective subset of the antennas 24. The functionality of the baseband processor 16 described above is implemented in the baseband unit 40 either as hardware or a combination of hardware and software. For example, in some embodiments, the functionality of the baseband processor 16 described above may be fully or partially implemented in software that is, e.g., stored in the memory 44 and executed by the processor(s) 42.

In some embodiments, a computer program including instructions which, when executed by at least one processor, causes the at least one processor to carry out the functionality of the base station 12 according to any of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as memory).

Figure 14 is a schematic block diagram of the base station 12 according to some other embodiments of the present disclosure. The base station 12 includes one or more modules 54, each of which is implemented in software. The module(s) 54 provide the functionality of the base station 12 described herein. For example, the module(s) 54 may include a beamforming module configured to perform ZF beamforming as described above and a phase-shift adjustment module configured to adjust the phase-shifts applied by the phase shifters 22 of the phased arrays 20 as described above.

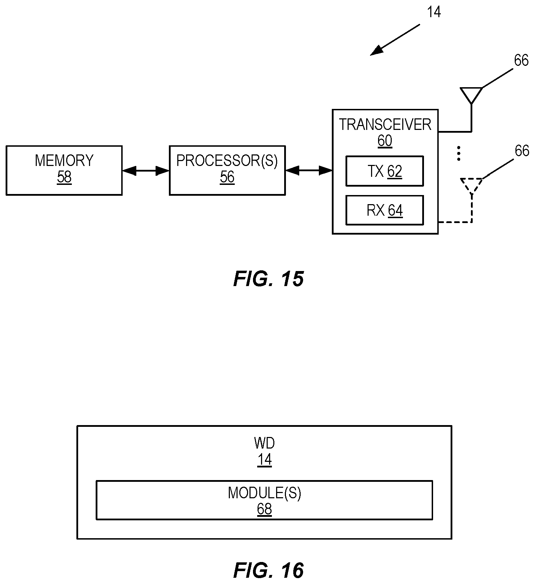

Figure 15 is a schematic block diagram of the wireless device 14 (e.g., UE) according to some embodiments of the present disclosure. As illustrated, the wireless device 14 includes one or more processors 56 (e.g., CPUs, ASICs, FPGAs, and/or the like), memory 58, and a transceiver 60 including a transmitter 62 and a receiver 64 coupled to one or more antennas 66.

In some embodiments, a computer program including instructions which, when executed by at least one processor, causes the at least one processor to carry out the functionality of the wireless device 14 according to any of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as memory).

Figure 16 is a schematic block diagram of the wireless device 14 according to some other embodiments of the present disclosure. The wireless device 14 includes one or more modules 68, each of which is implemented in software. The module(s) 68 provide the functionality of the wireless device 14 described herein.

The following acronyms are used throughout this disclosure.

- 3GPP Third Generation Partnership Project
- AP Access Point
- ASIC Application Specific Integrated Circuit
- BS Base Station
- BTS Base Transceiver Station
- CPU Central Processing Unit
- CSI-RS Channel State Information Reference Signal
- DAS Distributed Antenna System
- EDGE Enhanced Data Rates for Global Evolution
- EGT Equal Gain Transmission
- eNB Enhanced or Evolved Node B
- EPC Evolved Packet Core
- E-UTRAN Evolved Universal Terrestrial Radio Access Network

(continued)

| | | |
|---|---|---|
| • FDD | Frequency Division Duplexing | |
| • FPGA | Field Programmable Gate Array | |
| • GERAN | Global System for Mobile Communications Enhanced Data Rates for Global Evolution | |
| • GSM | Global System for Mobile Communications | |
| • LEE | Laptop Embedded Equipment | |
| • LME | Laptop Mounted Equipment | |
| • LTE | Long Term Evolution | |
| • M2M | Machine to Machine | |
| • MIMO | Multiple Input Multiple Output | |
| • MME | Mobility Management Entity | |
| • M-MIMO | Massive Multiple Input Multiple Output | |
| • MTC | Machine Type Communication | |
| • MU-MIMO | Multi-User Multiple Input Multiple Output | |
| • PDA | Personal Digital Assistant | |
| • P-GW | Packet Data Network Gateway | |
| • RAN | Radio Access Network | |
| • RAT | Radio Access Technology | |
| • RF | Radio Frequency | |
| • RRH | Remote Radio Head | |
| • RRU | Remote Radio Unit | |
| • RSRP | Reference Signal Received Power | |
| • RSRQ | Reference Signal Received Quality | |
| • S-GW | Serving Gateway | |
| • SINR | Signal-to-Interference-plus-Noise Ratio | |
| • SNR | Signal-to-Noise Ratio | |
| • TDD | Time Division Duplexing | |
| • UE | User Equipment | |
| • USB | Universal Serial Bus | |
| • UTRA | Universal Terrestrial Radio Access | |
| • WAN | Wide Area Network | |
| • WCDMA | Wideband Code Division Multiple Access | |
| • ZF | Zero-Forcing | |

## Claims

1. A network node (12) in a cellular communications network (26), comprising:

   • a plurality, M, of antennas (24);
   • a plurality, R, of Radio Frequency, RF, chains (18);
   • a plurality, R, of phased arrays (20), each phased array (20) of the plurality of phased arrays (20) comprising:

   - a plurality, L, of phase shifters (22) comprising inputs all coupled to a respective RF chain (18) of the plurality of RF chains (18) and outputs coupled to a respective subset of the plurality of antennas (24) such that each phase shifter (22) of the plurality of phased arrays (20) is coupled to a different one of the plurality of antennas (24) such that $M = R \cdot L$; and

   • a baseband processor (16) configured to:

   - perform Zero-Forcing, ZF, beamforming on a resultant equivalent channel between the plurality of antennas (24) and a plurality, K, of scheduled wireless devices (14); and
   - adjust phase-shifts applied by the plurality of phase shifters (22) of the plurality of phased arrays (20) according to an Equal Gain Transmission, EGT, scheme, per phased array, wherein the ZF beamforming

11

is dependent on the phase-shifts applied by the plurality of phase shifters (22) of the plurality of phased arrays (20).

2. The network node (12) of claim 1 wherein:

- the baseband processor (16) is configured to perform the ZF beamforming by precoding data symbols intended for transmission to the plurality of scheduled wireless devices (14) in accordance with a ZF precoding matrix **B** defined as:

$$\mathbf{B} = \sqrt{\frac{P_{tot}}{Tr(HWW^H H^H)^{-1}}} W^H H^H (HWW^H H^H)^{-1}$$

-- where $P_{tot}$ is a transmit power available for transmission, Tr is a trace function, **H** is a matrix of channel gains between the plurality of antennas (24) and the plurality of scheduled wireless devices (14), and **W** is

$$\begin{bmatrix} \mathbf{w}_1 & 0 & \cdots & 0 \\ 0 & \mathbf{w}_2 & \cdots & 0 \\ \vdots & \vdots & \ddots & \vdots \\ 0 & 0 & \cdots & \mathbf{w_R} \end{bmatrix}$$

-- where $\mathbf{w_r}$ is a unity norm vector of the phase-shifts applied by an r-th phased array (20-r); and/or

- for a r-th phased array (20-r) of the plurality of phased arrays (20) for all values of j from 1 to L, the baseband processor (16) is further configured to adjust the phase-shift applied by the j-th phase shifter (22-r(j)) of the r-th phased array (20-r) such that the phase shift value applied by the j-th phase shifter (22-r(j)) of the r-th phased array (20-r) is equal to $-\phi_j$, where $\phi_j$ is a phase angle of the channel gain between the antenna (24) connected to the output of the j-th phase shifter (22-r(j)) and a corresponding wireless device (14) assigned to the r-th phased array (20-r).

3. The network node (12) of claim 1 wherein, in order to adjust the phase-shifts applied by the plurality of phase shifters (22) of the plurality of phased arrays (20) according to the EGT scheme, the baseband processor (16) is further configured to:

adjust the phase-shifts applied by the plurality of phase shifters (22-1(1) through 22-1(L)) of a first phased array (20-1) of the plurality of phased arrays (20) in an EGT fashion based on channel gains from the respective subset of the plurality of antennas (24) to a first scheduled wireless device (14) assigned to the first phased array (20-1); and
adjust the phase-shifts applied by the plurality of phase shifters (22-2(1) through 22-2(L)) of a second phased array (20-2) of the plurality of phased arrays (20) in an EGT fashion based on channel gains from the respective subset of the plurality of antennas (24) to a second scheduled wireless device (14) assigned to the second phased array (20-2).

4. The network node (12) of claim 3 wherein the EGT scheme is a sequential EGT scheme such that the first scheduled wireless device (14) assigned to the first phased array (20-1) is the first scheduled wireless device (14) in a defined sequence of scheduled wireless devices (14) and the second scheduled wireless device (14) assigned to the second phased array (20-2) is the second scheduled wireless device (14) in the defined sequence of scheduled wireless devices (14).

5. The network node (12) of claim 3 wherein the EGT scheme is a best user EGT scheme such that:

the first scheduled wireless device (14) assigned to the first phased array (20-1) is one of the plurality of scheduled wireless devices (14) having a best channel metric from among channel metrics for a channel between the respective subset of the plurality of antennas (24) coupled to the first phased array (20-1) and the plurality of scheduled wireless devices (14); and
the second scheduled wireless device (14) assigned to the second phased array (20-2) is one of the remaining, unassigned scheduled wireless devices (14) having a best channel metric from among channel metrics for the channel between the respective remaining subset of the plurality of antennas (24) coupled to the second phased array (20-2) and the remaining, unassigned scheduled wireless devices (14).

6. The network node (12) of claim 5 wherein, for each scheduled wireless device (14), the channel metrics for the channel between the respective subset of the plurality of antennas (24) coupled to the first phased array (20-1) and the plurality of scheduled wireless devices (14) are $l_1$-norms of the channel gains from the respective subset of the plurality of antennas (24) to the plurality of scheduled wireless devices (14).

7. The network node (12) of claim 1 wherein:

   - the EGT scheme is a sequential EGT scheme, the number K of scheduled wireless devices (14) is equal to R, and, in order to adjust the phase-shifts applied by the plurality of phase shifters (22) of the plurality of phased arrays (20) according to the sequential EGT scheme, the baseband processor (16) is further configured to:

     -- sequentially assign the plurality of phased arrays (20) to the number K of scheduled wireless devices (14); and
     -- for each phased array (20) of the plurality of phased arrays (20), adjust the phase-shifts applied by the plurality of phase shifters (22) of the phased array (20) in an EGT fashion based on channel gains from the respective subset of the plurality of antennas (24) to one of the number K of scheduled wireless devices (14) to which the phased array (20) is assigned; or

   - wherein the EGT scheme is a sequential EGT scheme, the number K of scheduled wireless devices (14) is less than R, and, in order to adjust the phase-shifts applied by the plurality of phase shifters (22) of the plurality of phased arrays (20) according to the sequential EGT scheme, the baseband processor (16) is further configured to:

     -- sequentially assign the plurality of phased arrays (20) to the number K of scheduled wireless devices (14) in a repetitive fashion until each of the plurality of phased arrays (20) is assigned to one of the number K of scheduled wireless devices (14); and
     -- for each phased array (20) of the plurality of phased arrays (20), adjust the phase-shifts applied by the plurality of phase shifters (22) of the phased array in an EGT fashion based on channel gains from the respective subset of the plurality of antennas (24) to the one of the number K of scheduled wireless devices (14) to which the phased array (20) is assigned.

8. The network node (12) of claim 1 wherein the EGT scheme is a best user EGT scheme, the number K of scheduled wireless devices (14) is equal to R, and, in order to adjust the phase-shifts applied by the plurality of phase shifters (22) of the plurality of phased arrays (20) according to the best user EGT scheme, the baseband processor (16) is further configured to:

   assign the plurality of phased arrays (20) to the plurality K of scheduled wireless devices (14) according to channel metrics for the channels between the plurality of phased arrays (20) and the number K of scheduled wireless devices (14); and
   for each phased array (20) of the plurality of phased arrays (20), adjust the phase-shifts applied by the plurality of phase shifters (22) of the phased array (20) in an EGT fashion based on channel gains from the respective subset of the plurality of antennas (24) to one of the number K of scheduled wireless devices (14) to which the phased array (20) is assigned.

9. The network node (12) of claim 1 wherein the EGT scheme is a best user EGT scheme, the number K of scheduled wireless devices (14) is less than R, and, in order to adjust the phase-shifts applied by the plurality of phase shifters (22) of the plurality of phased arrays (20) according to the best user EGT scheme, the baseband processor (16) is further configured to:

   assign the plurality of phased arrays (20) to the number K of scheduled wireless devices (14) according to channel metrics for channels between the plurality of phased arrays (20) and the number K of scheduled wireless devices (14) in a repetitive fashion until each of the plurality of phased arrays (20) is assigned to one of the number K of scheduled wireless devices (14); and
   for each phased array (20) of the plurality of phased arrays (20), adjust the phase-shifts applied by the plurality of phase shifters (22) of the phased array (20) in an EGT fashion based on channel gains from the respective subset of the plurality of antennas (24) to the one of the plurality K of scheduled wireless devices (14) to which the phased array (20) is assigned.

10. The network node (12) of claim 8 or 9 wherein, for each phased array (20), the channel metrics are $l_1$-norms of the channel gains from the respective subset of the plurality of antennas (24) to the plurality of scheduled wireless devices (14).

11. The network node (12) of any of claims 1 to 10 wherein the baseband processor (16) is further configured to adaptively vary Signal-to-Noise Ratio, SNR, and/or Signal-to-Interference-plus-Noise Ratio, SINR, of the plurality of scheduled wireless devices (14) based on the number of wireless devices (14) being scheduled.

12. The network node (12) of claim 11 wherein the SNR and/or SINR of the plurality of scheduled wireless devices (14) are adaptively varied to maximize possible spectral efficiency.

13. A method of operation of a network node (12) in a cellular communications network (26), the network node (12) having a sub-connected architecture in which each of a plurality, R, of Radio Frequency, RF, chains (18) feeds a different subset of a plurality, M, of antennas (24) via a different one of a respective plurality, R, of phased arrays (20) each comprising a plurality, L, of phase shifters (22) each coupled to a different one of the plurality of antennas such that M = R·L, comprising:

performing (100) Zero-Forcing, ZF, beamforming on a resultant equivalent channel between the plurality of antennas (24) and a plurality, K, of scheduled wireless devices (14); and
adjusting (102) phase-shifts applied by the plurality of phase shifters (22) of the plurality of phased arrays (20) in the sub-connected architecture according to an Equal Gain Transmission, EGT, scheme, per phased array, wherein the ZF beamforming is dependent on the phase-shifts applied by the plurality of phase shifters (22) of the plurality of phased arrays (20).

14. A computer program comprising instructions which, when executed on the baseband processor (16) of the network node (12) according to claim 1, cause the network node (12) to carry out the method according to claim 13.

15. A carrier containing the computer program of claim 14, wherein the carrier is one of an electronic signal, an optical signal, a radio signal, or a computer readable storage medium.

**Patentansprüche**

1. Netzwerkknoten (12) in einem zellularen Kommunikationsnetz (26), umfassend:

• eine Vielzahl M von Antennen (24);
• eine Vielzahl R von Hochfrequenz-, HF-, Ketten (18);
• eine Vielzahl R von phasengesteuerten Arrays (20), wobei jedes phasengesteuerte Array (20) der Vielzahl von phasengesteuerten Arrays (20) Folgendes umfasst:

- eine Vielzahl L von Phasenschiebern (22), die Eingänge umfassen, die alle mit einer jeweiligen HF-Kette (18) der Vielzahl von HF-Ketten (18) gekoppelt sind, und Ausgänge umfassen, die mit einer jeweiligen Teilmenge der Vielzahl von Antennen (24) gekoppelt sind, so dass jeder Phasenschieber (22) der Vielzahl von phasengesteuerten Arrays (20) mit einer anderen der Vielzahl von Antennen (24) gekoppelt ist, so dass M = R • L; und

• einen Basisbandprozessor (16), der für Folgenes konfiguriert ist:

- Durchführen von Zero-Forcing-, ZF, Strahlformung auf einem resultierenden äquivalenten Kanal zwischen der Vielzahl von Antennen (24) und der Vielzahl K von geplanten drahtlosen Vorrichtungen (14); und
- Einstellen der Phasenverschiebungen, die von der Vielzahl von Phasenschiebern (22) der Vielzahl von phasengesteuerten Arrays (20) angewendet werden, gemäß einem Gleichverstärkungsübertragungs-(Equal Gain Transmission, EGT) Schema pro phasengesteuertem Array,

wobei die ZF-Strahlformung von den Phasenverschiebungen abhängt, die von der Vielzahl von Phasenschiebern (22) der Vielzahl von phasengesteuerten Arrays (20) angewendet werden.

2. Netzwerkknoten (12) nach Anspruch 1, wobei:

- der Basisbandprozessor (16) dafür konfiguriert ist, die ZF-Strahlformung durch Vorcodieren von Datensymbolen durchzuführen, die zur Übertragung an die Vielzahl von geplanten drahtlosen Vorrichtungen (14) gemäß einer ZF-Vorcodierungsmatrix **B** bestimmt sind, die definiert ist als:

$$\mathbf{B} = \sqrt{\frac{P_{tot}}{Tr(HWW^H H^H)^{-1}}} W^H H^H (HWW^H H^H)^{-1}$$

-- wobei $P_{tot}$ eine zur Übertragung verfügbare Sendeleistung ist, Tr eine Verfolgungsfunktion ist, **H** eine Matrix von Kanalverstärkungen zwischen der Vielzahl von Antennen (24) und der Vielzahl von geplanten drahtlosen Vorrichtungen (14) ist und **W** Folgendes ist:

$$\begin{bmatrix} \mathbf{w_1} & 0 & \cdots & 0 \\ 0 & \mathbf{w_2} & \cdots & 0 \\ \vdots & \vdots & \ddots & \vdots \\ 0 & 0 & \cdots & \mathbf{w_R} \end{bmatrix}$$

- wobei $\mathbf{w_r}$ ein Einheitsnormvektor der Phasenverschiebungen ist, die von einem r-ten phasengesteuerten Array (20-r) angewendet werden; und/oder
- für ein r-te phasengesteuertes Array (20-r) der Vielzahl von phasengesteuerten Arrays (20) für alle Werte von j von 1 bis L ist der Basisbandprozessor (16) ferner dafür konfiguriert, die Phasenverschiebung einzustellen, die vom j-ten Phasenschieber (22-r (j)) des r-ten Phasenarrays (20-r) angewendet wird, so dass der vom j-ten Phasenschieber (22-r (j)) des r-ten Phasenarrays (20-r) angelegte Phasenverschiebungswert gleich-$\Phi_j$ ist, wobei $\Phi_j$ ein Phasenwinkel der Kanalverstärkung zwischen der Antenne (24) ist, die mit dem Ausgang des j-ten Phasenschiebers (22-r (j)) und einer entsprechenden drahtlosen Vorrichtung (14), die dem r-ten phasengesteuerten Array (20-r) zugeordnet ist, verbunden ist.

3.  Netzwerkknoten (12) nach Anspruch 1, wobei zum Einstellen der Phasenverschiebungen, die durch die Vielzahl von Phasenschiebern (22) der Vielzahl von phasengesteuerten Arrays (20) gemäß dem EGT-Schema angewendet werden, der Basisbandprozessor (16) ferner für Folgendes konfiguriert ist:

    Einstellen der Phasenverschiebungen, die von der Vielzahl von Phasenschiebern (22-1(1) bis 22-1(L)) eines ersten phasengesteuerten Arrays (20-1) der Vielzahl von phasengesteuerten Arrays (20) angewendet werden, auf eine EGT-Weise, basierend auf Kanalverstärkungen von der jeweiligen Teilmenge der Vielzahl von Antennen (24) auf eine erste geplante drahtlose Vorrichtung (14), die dem ersten phasengesteuerten Array (20-1) zugeordnet ist; und
    Einstellen der Phasenverschiebungen, die von der Vielzahl von Phasenschiebern (22-2(1) bis 22-2(L)) eines zweiten phasengesteuerten Arrays (20-2) der Vielzahl von phasengesteuerten Arrays (20) angewendet werden, auf eine EGT-Weise, basierend auf Kanalverstärkungen von der jeweiligen Teilmenge der Vielzahl von Antennen (24) auf eine zweite geplante drahtlose Vorrichtung (14), die dem zweiten phasengesteuerten Array (20-2) zugeordnet ist.

4.  Netzwerkknoten (12) nach Anspruch 3, wobei das EGT-Schema ein sequentielles EGT-Schema ist, so dass die erste geplante drahtlose Vorrichtung (14), die dem ersten phasengesteuerten Array (20-1) zugeordnet ist, die erste geplante drahtlose Vorrichtung (14) in einer definierten Folge von geplanten drahtlosen Vorrichtungen (14) ist und die zweite geplante drahtlose Vorrichtung (14), die dem zweiten phasengesteuerten Array (20-2) zugeordnet ist, die zweite geplante drahtlose Vorrichtung (14) in der definierten Folge von geplanten drahtlosen Vorrichtungen (14) ist.

5.  Netzwerkknoten (12) nach Anspruch 3, wobei das EGT-Schema ein EGT-Schema für den besten Benutzer ist, so dass:

    die erste geplante drahtlose Vorrichtung (14), die dem ersten phasengesteuerten Array (20-1) zugeordnet ist, eine der Vielzahl von geplanten drahtlosen Vorrichtungen (14) ist, die eine beste Kanalmetrik unter den Kanalmetriken für einen Kanal zwischen der jeweiligen Teilmenge der Vielzahl von Antennen (24), die mit dem ersten phasengesteuerten Array (20-1) und der Vielzahl von geplanten drahtlosen Vorrichtungen (14) gekoppelt sind; und

die zweite geplante drahtlose Vorrichtung (14), die dem zweiten phasengesteuerten Array (20-2) zugeordnet ist, eine der verbleibenden, nicht zugeordneten geplanten drahtlosen Vorrichtungen (14) ist, die eine beste Kanalmetrik unter den Kanalmetriken für den Kanal zwischen der jeweiligen verbleibenden Teilmenge der Vielzahl von Antennen (24), die mit dem zweiten phasengesteuerten Array (20-2) und den verbleibenden, nicht zugeordneten geplanten drahtlosen Vorrichtungen (14) gekoppelt sind.

6. Netzwerkknoten (12) nach Anspruch 5, wobei für jede geplante drahtlose Vorrichtung (14) die Kanalmetriken für den Kanal zwischen der jeweiligen Teilmenge der Vielzahl von Antennen (24), die mit dem ersten phasengesteuerten Array (20-1) und der Vielzahl von geplanten drahtlosen Vorrichtungen (14) gekoppelt sind, $I_1$-Normen der Kanalverstärkungen von der jeweiligen Teilmenge der Vielzahl von Antennen (24) zur Vielzahl der geplanten drahtlosen Vorrichtungen (14) sind.

7. Netzwerkknoten (12) nach Anspruch 1, wobei:

- das EGT-Schema ein sequentielles EGT-Schema ist, die Anzahl K der geplanten drahtlosen Vorrichtungen (14) gleich R ist, und wobei zur Anpassung der Phasenverschiebungen, die von der Vielzahl von Phasenschiebern (22) der Vielzahl von phasengesteuerten Arrays (20) gemäß dem sequentiellen EGT-Schema angewendet werden, der Basisbandprozessor (16) ferner für Folgendes konfiguriert ist:

-- sequentielles Zuordnen der Anzahl von phasengesteuerten Arrays (20) zu der Anzahl K von geplanten drahtlosen Vorrichtungen (14); und
-- für jedes phasengesteuerte Array (20) der Vielzahl von phasengesteuerten Arrays (20), Einstellen der Phasenverschiebungen, die von der Vielzahl von Phasenschiebern (22) des phasengesteuerten Arrays (20) angewendet werden, auf eine EGT-Weise, basierend auf Kanalverstärkungen von der jeweiligen Teilmenge der Vielzahl von Antennen (24) zu einer der Anzahl K von geplanten drahtlosen Vorrichtungen (14), denen das phasengesteuerte Array (20) zugeordnet ist; oder

- wobei das EGT-Schema ein sequentielles EGT-Schema ist, die Anzahl K der geplanten drahtlosen Vorrichtungen (14) kleiner R ist, und wobei, um die Phasenverschiebungen einzustellen, die von der Vielzahl von Phasenschiebern (22) der Vielzahl von phasengesteuerten Arrays (20) gemäß dem sequentiellen EGT-Schema angewendet werden, der Basisbandprozessor (16) ferner für Folgendes konfiguriert ist:

-- sequentielles Zuordnen der Vielzahl von phasengesteuerten Arrays (20) zu der Anzahl K von geplanten drahtlosen Vorrichtungen (14) in wiederholter Weise, bis jedes der Vielzahl von phasengesteuerten Arrays (20) einer der Anzahl K von geplanten drahtlosen Vorrichtungen (14) zugeordnet ist; und
-- für jedes phasengesteuerte Array (20) der Vielzahl von phasengesteuerten Arrays (20), Einstellen der Phasenverschiebungen, die von der Vielzahl von Phasenschiebern (22) des phasengesteuerten Arrays angewendet werden, auf eine EGT-Weise, basierend auf Kanalverstärkungen von der jeweiligen Teilmenge der Vielzahl von Antennen (24) zu der einen der Anzahl K von geplanten drahtlosen Vorrichtungen (14), denen das phasengesteuerte Array (20) zugeordnet ist.

8. Netzwerkknoten (12) nach Anspruch 1, wobei das EGT-Schema ein EGT-Schema für den besten Benutzer ist, die Anzahl K der geplanten drahtlosen Vorrichtungen (14) gleich R ist, und wobei zur Anpassung der Phasenverschiebungen, die von der Vielzahl von Phasenschiebern (22) der Vielzahl von phasengesteuerten Arrays (20) gemäß dem EGT-Schema für den besten Benutzer angewendet werden, der Basisbandprozessor (16) ferner für Folgendes konfiguriert ist:

Zuweisen der Vielzahl von phasengesteuerten Arrays (20) zu der Vielzahl K von geplanten drahtlosen Vorrichtungen (14) gemäß Kanalmetriken für die Kanäle zwischen der Vielzahl von phasengesteuerten Arrays (20) und der Anzahl K von geplanten drahtlosen Vorrichtungen (14); und
für jedes phasengesteuerte Array (20) der Vielzahl von phasengesteuerten Arrays (20), Einstellen der Phasenverschiebungen, die von der Vielzahl von Phasenschiebern (22) des phasengesteuerten Arrays (20) angewendet werden, auf eine EGT-Weise, basierend auf Kanalverstärkungen von der jeweiligen Teilmenge der Vielzahl von Antennen (24) zu einer der Anzahl K von geplanten drahtlosen Vorrichtungen (14), denen das phasengesteuerte Array (20) zugeordnet ist.

9. Netzwerkknoten (12) nach Anspruch 1, wobei das EGT-Schema ein EGT-Schema für den besten Benutzer ist, die Anzahl K der geplanten drahtlosen Vorrichtungen (14) kleiner R ist, und wobei, um die Phasenverschiebungen einzustellen, die von der Vielzahl von Phasenschiebern (22) der Vielzahl von phasengesteuerten Arrays (20) gemäß dem EGT-Schema für den besten Benutzer angewendet werden, der Basisbandprozessor (16) ferner für Folgendes konfiguriert ist:

Zuweisen der Vielzahl von phasengesteuerten Arrays (20) zu der Anzahl K von geplanten drahtlosen Vorrichtungen (14) gemäß Kanalmetriken für Kanäle zwischen der Vielzahl von phasengesteuerten Arrays (20) und der Anzahl K von geplanten drahtlosen Vorrichtungen (14) in wiederholter Weise, bis jedes der Vielzahl von phasengesteuerten Arrays (20) einer der Anzahl K von geplanten drahtlosen Vorrichtungen (14) zugeordnet ist; und

für jedes phasengesteuerte Array (20) der Vielzahl von phasengesteuerten Arrays (20), Einstellen der Phasenverschiebungen, die von der Vielzahl von Phasenschiebern (22) des phasengesteuerten Arrays (20) angewendet werden, auf eine EGT-Weise, basierend auf Kanalverstärkungen von der jeweiligen Teilmenge der Vielzahl von Antennen (24) zu der einen der Vielzahl K von geplanten drahtlosen Vorrichtungen (14), denen das phasengesteuerte Array (20) zugeordnet ist.

10. Netzwerkknoten (12) nach Anspruch 8 oder 9, wobei für jedes phasengesteuerte Array (20) die Kanalmetriken $I_1$-Normen der Kanalverstärkungen von der jeweiligen Teilmenge der Vielzahl von Antennen (24) zu der Vielzahl von geplanten drahtlosen Vorrichtungen (14) sind.

11. Netzwerkknoten (12) nach einem der Ansprüche 1 bis 10, wobei der Basisbandprozessor (16) ferner dafür konfiguriert ist, das Signal-Rausch-Verhältnis (Signal-to-Noise Ratio, SNR) und/oder das Signal-Interferenz-Plus-Rausch-Verhältnis (Signal-to-Interference-plus-Noise Ratio, SINR) der Vielzahl von geplanten drahtlosen Vorrichtungen (14) basierend auf der Anzahl der geplanten drahtlosen Vorrichtungen (14) adaptiv zu variieren.

12. Netzwerkknoten (12) nach Anspruch 11, wobei das SNR und/oder SINR der Vielzahl von geplanten drahtlosen Vorrichtungen (14) adaptiv variiert werden, um die mögliche spektrale Effizienz zu maximieren.

13. Betriebsverfahren eines Netzwerkknotens (12) in einem zellularen Kommunikationsnetz (26), wobei der Netzwerkknoten (12) eine unterverbundene Architektur aufweist, in der jede einer Vielzahl, R, von Hochfrequenz-, HF, Ketten (18) eine andere Untermenge einer Vielzahl, M, von Antennen (24) über eine andere einer jeweiligen Vielzahl, R, von phasengesteuerten Arrays (20) speist, wobei jedes eine Vielzahl L von Phasenschiebern (22) umfasst, die jeweils mit einer anderen der Vielzahl von Antennen gekoppelt sind, so dass M = R · L ist, umfassend:

Durchführen (100) von Zero-Forcing-, ZF, Strahlformung auf einem resultierenden äquivalenten Kanal zwischen der Vielzahl von Antennen (24) und einer Vielzahl K von geplanten drahtlosen Vorrichtungen (14); und
Einstellen (102) der Phasenverschiebungen, die von der Vielzahl von Phasenschiebern (22) der Vielzahl von phasengesteuerten Arrays (20) in der unterverbundenen Architektur angewendet werden, gemäß einem Gleichverstärkungsübertragungs-, EGT, Schema pro phasengesteuertem Array,
wobei die ZF-Strahlformung von den Phasenverschiebungen abhängt, die von der Vielzahl von Phasenschiebern (22) der Vielzahl von phasengesteuerten Arrays (20) angewendet werden.

14. Computerprogramm mit Anweisungen, die, wenn sie auf dem Basisbandprozessor (16) des Netzwerkknotens (12) nach Anspruch 1 ausgeführt werden, den Netzwerkknoten (12) veranlassen, das Verfahren nach Anspruch 13 auszuführen.

15. Träger, der das Computerprogramm nach Anspruch 14 umfasst, wobei der Träger ein elektronisches Signal, ein optisches Signal, ein Funksignal oder ein computerlesbares Speichermedium ist.

## Revendications

1. Nœud de réseau (12) dans un réseau de communication cellulaire (26), comprenant :

• une pluralité, M, d'antennes (24) ;
• une pluralité, R, de chaînes radiofréquence, RF, (18) ;
• une pluralité, R, de réseaux à commande de phase (20), chaque réseau à commande de phase (20) de la pluralité de réseaux à commande de phase (20) comprenant :

- une pluralité, L, de déphaseurs (22) comprenant des entrées, toutes couplées à une chaîne RF respective (18) de la pluralité de chaînes RF (18), et des sorties, couplées à un sous-ensemble respectif de la pluralité d'antennes (24), de telle sorte que chaque déphaseur (22) de la pluralité de réseaux à commande de phase (20) soit couplé à une différente de la pluralité d'antennes (24) de telle sorte que M = R·L ; et

• un processeur de bande de base (16) configuré pour :

- réaliser une mise en forme de faisceau à forçage à zéro, ZF, sur un canal équivalent résultant entre la pluralité d'antennes (24) et une pluralité, K, de dispositifs sans fil ordonnancés (14) ; et
- ajuster des déphasages appliqués par la pluralité de déphaseurs (22) de la pluralité de réseaux à commande de phase (20) selon un schéma de transmission à égalité de gain, EGT, pour chaque réseau à commande de phase,

dans lequel la mise en forme de faisceau ZF dépend des déphasages appliqués par la pluralité de déphaseurs (22) de la pluralité de réseaux à commande de phase (20).

2. Nœud de réseau (12) selon la revendication 1, dans lequel :

- le processeur de bande de base (16) est configuré pour réaliser la mise en forme de faisceau ZF en précodant des symboles de données prévus pour la transmission à la pluralité de dispositifs sans fil ordonnancés (14) conformément à une matrice de précodage ZF **B** définie par :

$$B = \sqrt{\frac{P_{tot}}{Tr(HWW^H H^H)^{-1}}} W^H H^H (HWW^H H^H)^{-1}$$

-- où $P_{tot}$ est une puissance de transmission disponible pour la transmission, Tr est une fonction trace, **H** est une matrice de gains de canal entre la pluralité d'antennes (24) et la pluralité de dispositifs sans fil ordonnancés (14), et **W** est

$$\begin{bmatrix} w_1 & 0 & \cdots & 0 \\ 0 & w_2 & \cdots & 0 \\ \vdots & \vdots & \ddots & \vdots \\ 0 & 0 & \cdots & w_R \end{bmatrix}$$

-- où **w$_r$** est un vecteur de norme unité des déphasages appliqués par un r-ième réseau à commande de phase (20-r) ; et/ou

- pour un r-ième réseau à commande de phase (20-r) de la pluralité de réseaux à commande de phase (20) pour toutes les valeurs de j d'1 à L, le processeur de bande de base (16) est en outre configuré pour ajuster le déphasage appliqué par le j-ième déphaseur (22-r(j)) du r-ième réseau à commande de phase (20-r) de telle sorte que la valeur de déphasage appliquée par le j-ième déphaseur (22-r(j)) du r-ième réseau à commande de phase (20-r) soit égale à $\phi_j$, où $\phi_j$ est un angle de phase du gain de canal entre l'antenne (24) connectée à la sortie du j-ième déphaseur (22r(j)) et un dispositif sans fil correspondant (14) attribué au r-ième réseau à commande de phase (20r).

3. Nœud de réseau (12) selon la revendication 1, dans lequel, afin d'ajuster les déphasages appliqués par la pluralité de déphaseurs (22) de la pluralité de réseaux à commande de phase (20) selon le schéma EGT, le processeur de bande de base (16) est en outre configuré pour :

ajuster les déphasages appliqués par la pluralité de déphaseurs (22-1(1) à 22-1(L)) d'un premier réseau à commande de phase (20-1) de la pluralité de réseaux à commande de phase (20) de façon EGT sur la base de gains de canal depuis le sous-ensemble respectif de la pluralité d'antennes (24) jusqu'à un premier dispositif sans fil ordonnancé (14) attribué au premier réseau à commande de phase (20-1) ; et
ajuster les déphasages appliqués par la pluralité de déphaseurs (22-2(1) à 22-2(L)) d'un second réseau à commande de phase (20-2) de la pluralité de réseaux à commande de phase (20) de façon EGT sur la base de gains de canal depuis le sous-ensemble respectif de la pluralité d'antennes (24) jusqu'à un second dispositif sans fil ordonnancé (14) attribué au second réseau à commande de phase (20-2).

4. Nœud de réseau (12) selon la revendication 3, dans lequel le schéma EGT est un schéma EGT séquentiel de telle sorte que le premier dispositif sans fil ordonnancé (14) attribué au premier réseau à commande de phase (20-1) soit le premier dispositif sans fil ordonnancé (14) dans une séquence définie de dispositifs sans fil ordonnancés (14) et le second dispositif sans fil ordonnancé (14) attribué au second réseau à commande de phase (20-2) soit le second dispositif sans fil ordonnancé (14) dans la séquence définie de dispositifs sans fil ordonnancés (14).

5. Nœud de réseau (12) selon la revendication 3, dans lequel le schéma EGT est un schéma EGT de meilleur utilisateur de telle sorte que :

le premier dispositif sans fil ordonnancé (14) attribué au premier réseau à commande de phase (20-1) soit un de la pluralité de dispositifs sans fil ordonnancés (14) ayant une mesure de canal la meilleure parmi des mesures de canal pour un canal entre le sous-ensemble respectif de la pluralité d'antennes (24) couplé au premier réseau à commande de phase (20-1) et la pluralité de dispositifs sans fil ordonnancés (14) ; et
le second dispositif sans fil ordonnancé (14) attribué au second réseau à commande de phase (20-2) est un des dispositifs sans fil ordonnancés non attribués restants (14) ayant une mesure de canal la meilleure parmi des mesures de canal pour le canal entre le sous-ensemble restant respectif de la pluralité d'antennes (24) couplé au second réseau à commande de phase (20-2) et les dispositifs sans fil ordonnancés non attribués restants (14).

6. Nœud de réseau (12) selon la revendication 5, dans lequel, pour chaque dispositif sans fil ordonnancé (14), les mesures de canal pour le canal entre le sous-ensemble respectif de la pluralité d'antennes (24) couplé au premier réseau à commande de phase (20-1) et la pluralité de dispositifs sans fil ordonnancés (14) sont des normes $l_1$ des gains de canal depuis le sous-ensemble respectif de la pluralité d'antennes (24) jusqu'à la pluralité de dispositifs sans fil ordonnancés (14).

7. Nœud de réseau (12) selon la revendication 1, dans lequel :

- le schéma EGT est un schéma EGT séquentiel, le nombre K de dispositifs sans fil ordonnancés (14) est égal à R, et, afin d'ajuster les déphasages appliqués par la pluralité de déphaseurs (22) de la pluralité de réseaux à commande de phase (20) selon le schéma EGT séquentiel, le processeur de bande de base (16) est en outre configuré pour :

-- séquentiellement attribuer la pluralité de réseaux à commande de phase (20) au nombre K de dispositifs sans fil ordonnancés (14) ; et
-- pour chaque réseau à commande de phase (20) de la pluralité de réseaux à commande de phase (20), ajuster les déphasages appliqués par la pluralité de déphaseurs (22) du réseau à commande de phase (20) de façon EGT sur la base de gains de canal depuis le sous-ensemble respectif de la pluralité d'antennes (24) jusqu'à un du nombre K de dispositifs sans fil ordonnancés (14) auquel le réseau à commande de phase (20) est attribué ; ou

- dans lequel le schéma EGT est un schéma EGT séquentiel, le nombre K de dispositifs sans fil ordonnancés (14) est inférieur à R, et, afin d'ajuster les déphasages appliqués par la pluralité de déphaseurs (22) de la pluralité de réseaux à commande de phase (20) selon le schéma EGT séquentiel, le processeur de bande de base (16) est en outre configuré pour :

-- séquentiellement attribuer la pluralité de réseaux à commande de phase (20) au nombre K de dispositifs sans fil ordonnancés (14) de façon répétitive jusqu'à ce que chacun de la pluralité de réseaux à commande de phase (20) soit attribué à un du nombre K de dispositifs sans fil ordonnancés (14) ; et
-- pour chaque réseau à commande de phase (20) de la pluralité de réseaux à commande de phase (20), ajuster les déphasages appliqués par la pluralité de déphaseurs (22) du réseau à commande de phase de façon EGT sur la base de gains de canal depuis le sous-ensemble respectif de la pluralité d'antennes (24) jusqu'à l'un du nombre K de dispositifs sans fil ordonnancés (14) auquel le réseau à commande de phase (20) est attribué.

8. Nœud de réseau (12) selon la revendication 1, dans lequel le schéma EGT est un schéma EGT de meilleur utilisateur, le nombre K de dispositifs sans fil ordonnancés (14) est égal à R, et, afin d'ajuster les déphasages appliqués par la pluralité de déphaseurs (22) de la pluralité de réseaux à commande de phase (20) selon le schéma EGT de meilleur utilisateur, le processeur de bande de base (16) est en outre configuré pour :

attribuer la pluralité de réseaux à commande de phase (20) à la pluralité K de dispositifs sans fil ordonnancés (14) selon des mesures de canal pour les canaux entre la pluralité de réseaux à commande de phase (20) et le nombre K de dispositifs sans fil ordonnancés (14) ; et

pour chaque réseau à commande de phase (20) de la pluralité de réseaux à commande de phase (20), ajuster les déphasages appliqués par la pluralité de déphaseurs (22) du réseau à commande de phase (20) de façon EGT sur la base de gains de canal depuis le sous-ensemble respectif de la pluralité d'antennes (24) jusqu'à un du nombre K de dispositifs sans fil ordonnancés (14) auquel le réseau à commande de phase (20) est attribué.

9. Nœud de réseau (12) selon la revendication 1, dans lequel le schéma EGT est un schéma EGT de meilleur utilisateur, le nombre K de dispositifs sans fil ordonnancés (14) est inférieur à R, et, afin d'ajuster les déphasages appliqués par la pluralité de déphaseurs (22) de la pluralité de réseaux à commande de phase (20) selon le schéma EGT de meilleur utilisateur, le processeur de bande de base (16) est en outre configuré pour :

attribuer la pluralité de réseaux à commande de phase (20) au nombre K de dispositifs sans fil ordonnancés (14) selon des mesures de canal pour des canaux entre la pluralité de réseaux à commande de phase (20) et le nombre K de dispositifs sans fil ordonnancés (14) de façon répétitive jusqu'à ce que chacun de la pluralité de réseaux à commande de phase (20) soit attribué à un du nombre K de dispositifs sans fil ordonnancés (14) ; et

pour chaque réseau à commande de phase (20) de la pluralité de réseaux à commande de phase (20), ajuster les déphasages appliqués par la pluralité de déphaseurs (22) du réseau à commande de phase (20) de façon EGT sur la base de gains de canal depuis le sous-ensemble respectif de la pluralité d'antennes (24) jusqu'à l'un de la pluralité K de dispositifs sans fil ordonnancés (14) auquel le réseau à commande de phase (20) est attribué.

10. Nœud de réseau (12) selon la revendication 8 ou 9, dans lequel, pour chaque réseau à commande de phase (20), les mesures de canal sont des normes $l_1$ des gains de canal depuis le sous-ensemble respectif de la pluralité d'antennes (24) jusqu'à la pluralité de dispositifs sans fil ordonnancés (14).

11. Nœud de réseau (12) selon l'une quelconque des revendications 1 à 10, dans lequel le processeur de bande de base (16) est en outre configuré pour varier de façon adaptative un rapport signal-sur-bruit, SNR, et/ou un rapport signal-sur-brouillage-plus-bruit, SINR, de la pluralité de dispositifs sans fil ordonnancés (14) sur la base du nombre de dispositifs sans fil (14) ordonnancés.

12. Nœud de réseau (12) selon la revendication 11, dans lequel le SNR et/ou SINR de la pluralité de dispositifs sans fil ordonnancés (14) sont variés de façon adaptative pour maximiser un rendement spectral possible.

13. Procédé de fonctionnement d'un nœud de réseau (12) dans un réseau de communication cellulaire (26), le nœud de réseau (12) ayant une architecture sous-connectée dans laquelle chacune d'une pluralité, R, de chaînes à radiofréquence, RF, (18) fournit un sous-ensemble différent d'une pluralité, M, d'antennes (24) par l'intermédiaire d'un différent d'une pluralité respective, R, de réseaux à commande de phase (20), chacun comprenant une pluralité, L, de déphaseurs (22), chacun couplé à une différent de la pluralité d'antennes de telle sorte que M = R·L, comprenant :

la réalisation (100) de mise en forme de faisceau à forçage à zéro, ZF, sur un canal équivalent résultant entre la pluralité d'antennes (24) et une pluralité, K, de dispositifs sans fil ordonnancés (14) ; et

l'ajustement (102) de déphasages appliqués par la pluralité de déphaseurs (22) de la pluralité de réseaux à commande de phase (20) dans l'architecture sous-connectée selon un schéma de transmission à égalité de gain, EGT, pour chaque réseau à commande de phase,

dans lequel la mise en forme de faisceau ZF dépend des déphasages appliqués par la pluralité de déphaseurs (22) de la pluralité de réseaux à commande de phase (20).

14. Programme d'ordinateur, comprenant des instructions qui, lorsqu'elles sont exécutées sur le processeur de bande de base (16) du nœud de réseau (12) selon la revendication 1, font en sorte que le nœud de réseau (12) réalise le procédé selon la revendication 13.

15. Porteuse contenant le programme d'ordinateur de la revendication 14, dans laquelle la porteuse est un d'un signal électronique, d'un signal optique, d'un signal radio, ou d'un support de stockage lisible par ordinateur.

FIG. 1. An illustration of a fully-connected architecture for hybrid precoding.

**FIG. 2. A MU-MIMO system where the BS is equipped with R phased arrays.**

FIG. 3

PERFORM ZERO-FORCING BEAMFORMING ON A RESULTANT EQUIVALENT CHANNEL BETWEEN THE ANTENNAS OF THE BASE STATION AND THE MULTIPLE USERS (OR UEs)
100

ADJUST PHASE-SHIFTS APPLIED BY THE PHASE SHIFTERS OF THE PHASED ARRAYS ACCORDING TO AN EGT SCHEME
102

ASSIGN THE PHASED ARRAYS TO RESPECTIVE USERS (OR UEs), e.g., USING A SEQUENTIAL OR BEST USER SCHEME
102A

FOR EACH PHASED ARRAY, ADJUST PHASE-SHIFTS APPLIED BY THE PHASE SHIFTERS OF THE PHASED ARRAY IN AN EGT FASHION BASED ON CHANNEL GAINS FROM THE RESPECTIVE SUBSET OF THE ANTENNAS OF THE BASE STATION TO THE SCHEDULED USER TO WHICH THE PHASED ARRAY IS ASSIGNED
102B

*FIG. 4*

FIG. 5

r=1; k=1
200

ASSIGN PHASE SHIFT VALUES TO THE r-th
PHASED ARRAY TO THE k-th USER (i.e., TO THE k-
th WIRELESS DEVICE)
202

r=R?
204 —YES→ END

NO

r=r+1
206

k<K?
208 —YES→ k=k+1
210

NO

k=1
212

**FIG. 6**

EP 3 403 339 B1

**FIG. 7**

*FIG. 8*

r=1; SET ALL USERS
UNASSIGNED
300

ASSIGN PHASE SHIFT VALUES TO THE r-th
PHASED ARRAY TO THE UNASSIGNED USER
HAVING HIGHEST CORRESPONDING CHANNEL
VECTOR NORM
302

r=R?
304

YES → END

NO

r=r+1
306

ALL USERS
ASSIGNED?
308

NO

YES

SET ALL USERS
UNASSIGNED
310

*FIG. 9*

FIG. 10

*FIG. 11*

26

S1

UE
14

30

14

EPC
32

P-GW(S)
38

S-GW(S)
36

MME(S)
34

X2

S1

12

30

UE
14

EUTRAN
28

*FIG. 12*

12

BASEBAND UNIT
40

NETWORK
INTERFACE
46

PROCESSOR(S)
42

MEMORY
44

RADIO UNIT
48

TX 50

RX 52

24

24

*FIG. 13*

BS
12

MODULE(S)
54

*FIG. 14*

33

14

66

TRANSCEIVER
60

MEMORY
58

PROCESSOR(S)
56

TX 62

RX 64

66

**FIG. 15**

WD
14

MODULE(S)
68

**FIG. 16**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2015365142 A1

### Non-patent literature cited in the description

- **F. RUSEK et al.** Scaling up MIMO: Opportunities and Challenges with Very Large Arrays. *IEEE Signal Process. Mag.,* January 2013, vol. 30 (1), 40-60
- **E. LARSSON et al.** Massive MIMO for Next Generation Wireless Systems. *IEEE Commun. Mag.,* February 2014, vol. 54 (2), 186-195
- **E. BJORNSON et al.** Optimal Design of Energy-Efficient Multi-User MIMO Systems: Is Massive MIMO the Answer?. *IEEE Trans. Wireless Commun.,* June 2015, vol. 14 (6), 3059-3075
- **B.M. LEE et al.** An Energy Efficient Antenna Selection for Large Scale Green MIMO Systems. *IEEE Int. Symp. Circuits and Systems (ISCAS),* May 2013, 950-953
- **X. GAO et al.** Antenna Selection in Measured Massive MIMO Channels Using Convex Optimization. *IEEE Globecom Workshops,* December 2013, 129-134
- **X. ZHANG et al.** Variable-Phase-Shift-Based RF Baseband Codesign for MIMO Antenna Selection. *IEEE Trans. Signal Process,* November 2005, vol. 53 (11), 4091-4103
- **S. HAN et al.** Large-Scale Antenna Systems with Hybrid Analog and Digital Beamforming for Millimeter Wave 5G. *IEEE Commun. Mag.,* January 2015, vol. 53 (1), 186-194
- **O. EI AYACH et al.** Spatially Sparse Precoding in Millimeter Wave MIMO Systems. *IEEE Trans. Wireless Commun.,* March 2014, vol. 13 (3), 1499-1513
- **A. ALKHATEEB et al.** Limited Feedback Hybrid Precoding for Multi-User Millimeter Wave Systems. *IEEE Trans. Wireless Commun.,* November 2015, vol. 14 (11), 6481-6494
- **L. LIANG et al.** Low-Complexity Hybrid Precoding in Massive Multiuser MIMO Systems. *IEEE Wireless Commun. Lett.,* December 2014, vol. 3 (6), 653-656
- **X. GAO et al.** Energy-Efficient Hybrid Analog and Digital Precoding for mmWave MIMO Systems with Large Antenna Arrays. *CoRR,* 2015
- **LE LIANG.** Low-Complexity Hybrid Precoding in Massive Multiuser MIMO Systems. *IEEE Wireless Communications Letters,* October 2014, vol. 3 (6
- **WEIHENG NI.** Hybrid Block Diagonalization for Massive Multiuser MIMO Systems. *IEEE Transactions on Communications,* April 2015, vol. 64 (1